(19)

Europäisches Patentamt
European Patent Office
Office européen des brevets

(11) **EP 3 107 234 B1**

(12) **EUROPEAN PATENT SPECIFICATION**

(45) Date of publication and mention
of the grant of the patent:
**28.03.2018 Bulletin 2018/13**

(51) Int Cl.:
***H04L 1/00*** *(2006.01)*   ***H04L 25/03*** *(2006.01)*
***H04B 10/00*** *(2013.01)*

(21) Application number: **14882683.7**

(22) Date of filing: **17.02.2014**

(86) International application number:
**PCT/CN2014/072163**

(87) International publication number:
**WO 2015/120631 (20.08.2015 Gazette 2015/33)**

(54) **METHOD, APPARATUS AND SYSTEM FOR TRANSMITTING SIGNAL IN OPTIMAL TRANSMISSION NETWORK**

VERFAHREN, VORRICHTUNG UND SYSTEM ZUR ÜBERTRAGUNG EINES SIGNALS IN EINEM OPTIMALEN ÜBERTRAGUNGSNETZWERK

PROCÉDÉ, APPAREIL ET SYSTÈME DE TRANSMISSION D'INFORMATIONS DANS UN RÉSEAU DE TRANSMISSION OPTIMAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**21.12.2016 Bulletin 2016/51**

(73) Proprietor: **Huawei Technologies Co., Ltd.
Longgang District
Shenzhen, Guangdong 518129 (CN)**

(72) Inventor: **SU, Wei
Shenzhen
Guangdong 518129 (CN)**

(74) Representative: **Gill Jennings & Every LLP
The Broadgate Tower
20 Primrose Street
London EC2A 2ES (GB)**

(56) References cited:
**EP-A1- 2 461 623      WO-A1-2011/022886
CN-A- 101 888 281      CN-A- 102 820 951
US-A- 5 946 398        US-A- 5 946 398**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## TECHNICAL FIELD

The present invention relates to the field of optical communications technologies, and in particular, to a method, an apparatus, and a system for signal transmission in an optical transport network.

## BACKGROUND

An optical transport network (OTN) is a transport network based on a wavelength division multiplexing technology in an optical layer organization network, can provide an enormous transport capacity, a fully transparent end-to-end wavelength/sub-wavelength connection, and carrier-class protection, and is a core technology in a transport network. The OTN has an abundant operation, administration and maintenance (OAM) capability, a powerful tandem connection monitoring (TCM) capability, and an out-of-band forward error correction (FEC) capability, and can implement flexible scheduling and management of a large-capacity service. However, with a massive increase of Internet service traffic, a traditional OTN technology cannot sustain a continuous bandwidth increase in the future, and therefore, the OTN needs to develop towards a higher transport rate, for example, 400 Gb/s (400 gigabits per second) or 1 TGb/s (1000 gigabits per second). To implement development towards the higher transport rate, the OTN needs a flexible optical spectrum allocation technology, a flexible higher order modulation technology, and a flexible multi-carrier technology. Therefore, the SG15/ITU-T currently discusses formulation of an OTUCn, a flexible line-rate OTU (optical channel transport unit), where C is a Roman numeral 100, n is a variable value, and a bit rate of the OTUCn is N times of a reference rate. The reference rate is at a rate level of 100 Gbit/s, for example, may be any value between 105.258 Gbit/s and 112.80384 Gbit/s, and preferably, may be any one of 112.80384 Gbit/s, 112.30471 Gbit/s, 112.55372 Gbit/s, and 105.725952 Gbit/s. The OTUCn can perform optimal configuration according to actual optical physical resources, so as to provide multi-level flexible-rate line interfaces, for example, provide multi-level flexible-rate line interfaces of 200 G, 300 G, ..., and n* 100 G according to an actual requirement. Introduction of the OTUCn implements flexibility of an OTN line interface, that is, an interface rate can vary with n, which satisfactorily meets flexible and efficient bearing of multiple services in the future, and can also meet an operator's refined operations requirement for optical spectrum bandwidth resources.

In the prior art, before sending an OTUCn signal to a receive end, a transmit end first needs to distribute the OTUCn signal to n OTL (optical channel transport lane) signals, separately perform FEC coding processing on the n OTL signals, then split each of the n OTL signals into four logical lanes, multiplex, into m physical lanes, 4*n logical lanes obtained through splitting, and transport the m physical lanes to the receive end, so that the receive end restores the n OTL signals from the m physical lanes, separately performs FEC decoding processing on the n OTL signals, and finally reassembles the n OTL signals into one OTUCn signal.

In the foregoing OTUCn signal transmission process, because a special pattern (for example, consecutive 0s or consecutive Is) may appear in an original data flow of the OTUCn signal or the OTL signal, long 0s or long 1s may occur in a line. For OTUCn signal transmission, a technical solution used to prevent the long 0s or long 1s is not considered or proposed in the prior art. Due to existence of the long 0s or long 1s, the receive end can not extract a clock from a received data flow, thus unable to further restore a correct OTUCn signal.

## SUMMARY

Embodiments of the present invention provide a method, an apparatus, and a system for signal transmission in an optical transport network, which can ensure that a receive end correctly restores an OTUCn signal.

To achieve the foregoing objective, the following technical solutions are used in the embodiments of the present invention:

According to a first aspect, a sending apparatus is provided, including:

a distribution unit, configured to: receive an OTUCn optical channel transport unit signal, and distribute the OTUCn signal as n OTL optical channel transport lane signals, where n is an integer greater than or equal to 2;
a scrambling unit, configured to separately perform scrambling processing on the n OTL signals based on n unrelated scrambler generator polynomials, where the n unrelated scrambler generator polynomials are n scrambler generator polynomials that have no common factor; and
a transport unit, configured to transport the OTL signals scrambled by the scrambling unit to a receiving apparatus over subcarriers.

In a first possible implementation manner of the first aspect, the sending apparatus further includes:

an acquiring unit, configured to acquire the n unrelated scrambler generator polynomials according to an OTL signal quantity n.

According to the first possible implementation manner of the first aspect, in a second possible implementation manner of the first aspect, the acquiring unit is specifically configured to acquire the n unrelated scrambler generator polynomials from a preconfigured scrambler generator polynomial repository according to the OTL signal quantity n, where at least n scrambler generator polynomials are stored in the scrambler generator polynomial repository.

According to the first possible implementation manner of the first aspect, in a third possible implementation manner of the first aspect,

the acquiring unit is specifically configured to: determine a highest degree of the scrambler generator polynomial; determine all prime numbers that are less than the highest degree of the scrambler generator polynomial; and generate the n unrelated scrambler generator polynomials according to the OTL signal quantity n, where degrees of all terms of each scrambler generator polynomial except a highest-degree term and a constant term are numbers in all the prime numbers, and any two polynomials are different.

With reference to the first aspect or any one of the first to the third possible implementation manners of the first aspect, in a fourth possible implementation manner of the first aspect, a scrambler generator polynomial corresponding to an OTL signal whose lane number is r in the n OTL signals is $G_r(x) = 1 + X + x^b$, where X is a term of the scrambler generator polynomial other than a highest-degree monomial and a constant term, and is determined according to the lane number r corresponding to the OTL signal; and b is a highest degree of the polynomial that is preconfigured or is delivered to the sending apparatus by using a network manager, and b is a natural number.

With reference to the first aspect or any one of the first to the fourth possible implementation manners of the first aspect, in a fifth possible implementation manner of the first aspect, the transport unit includes:

a splitting module, configured to split each scrambled OTL signal obtained by the scrambling unit into c logical lanes, to obtain c*n logical lanes in total, where c is a natural number;
a first multiplexing module, configured to multiplex the c*n logical lanes obtained by means of splitting by the splitting module into m multiplexed lane signals; and
a first transport module, configured to transport the m multiplexed lane signals obtained by means of multiplexing by the multiplexing module to the receiving apparatus over subcarriers.

According to the fifth possible implementation manner of the first aspect, in a sixth possible implementation manner of the first aspect, the first multiplexing module includes at least one multiplexing submodule, and the multiplexing submodule is configured to multiplex at least two logical lanes into one multiplexed lane signal, where the two logical lanes are not logical lanes split from a same scrambled OTL signal.

With reference to the first aspect or any one of the first to the fourth possible implementation manners of the first aspect, in a seventh possible implementation manner of the first aspect, the transport unit includes:

a second multiplexing module, configured to multiplex the n scrambled OTL signals into m multiplexed lane signals; and
a second transport module, configured to transport the m multiplexed lane signals obtained by means of multiplexing by the multiplexing module to the receiving apparatus over subcarriers.

With reference to the first aspect or any one of the first to seventh possible implementation manners of the first aspect, in an eighth possible implementation manner of the first aspect, the sending apparatus further includes:

a correspondence management unit, configured to store a correspondence between the n OTL signals and the n unrelated scrambler generator polynomials; or configured to generate a correspondence between the n OTL signals and the n unrelated scrambler generator polynomials; or configured to obtain a correspondence between the n OTL signals and the n unrelated scrambler generator polynomials from the network manager, where
the correspondence describes a scrambler generator polynomial used for each OTL signal when each OTL signal is scrambled.

According to the eighth possible implementation manner of the first aspect, in a ninth possible implementation manner of the first aspect, the scrambling unit is specifically configured to select a corresponding scrambler generator polynomial for each OTL signal according to the correspondence, so as to perform scrambling processing.

With reference to the eighth possible implementation manner of the first aspect or the ninth possible implementation manner of the first aspect, in a tenth possible implementation manner of the first aspect, the correspondence management unit is further configured to send the correspondence to the network manager or the receiving apparatus.

According to a second aspect, a receiving apparatus is provided, including:

a first acquiring unit, configured to acquire n OTL optical channel transport lane signals, where the n OTL signals are distributed from one OTUCn optical channel transport unit signal, and n is greater than or equal to 2;
a descrambling unit, configured to separately perform descrambling processing on the n OTL signals based on n unrelated scrambler generator polynomials, where the n unrelated scrambler generator polynomials are n scrambler generator polynomials that have no common factor; and
a reassembling unit, configured to reassemble the n OTL signals descrambled by the descrambling unit into the one OTUCn signal.

In a first possible implementation manner of the second aspect, the receiving apparatus further includes:

a second acquiring unit, configured to acquire the n unrelated scrambler generator polynomials according to an OTL signal quantity n.

According to the first possible implementation manner of the second aspect, in a second possible implementation manner of the second aspect,
the second acquiring unit is specifically configured to acquire the n unrelated scrambler generator polynomials from a preconfigured scrambler generator polynomial repository according to the OTL signal quantity n, where at least n unrelated scrambler generator polynomials are stored in the scrambler generator polynomial repository.

According to the first possible implementation manner of the second aspect, in a third possible implementation manner of the second aspect,
the second acquiring unit is specifically configured to: determine a highest degree of the scrambler generator polynomial; determine all prime numbers that are less than the highest degree of the scrambler generator polynomial; and generate the n unrelated scrambler generator polynomials according to the OTL signal quantity n, where degrees of all terms of each scrambler generator polynomial except a highest-degree term and a constant term are numbers in all the prime numbers, and any two polynomials are different.

With reference to the second aspect or any one of the first to the third possible implementation manners of the second aspect, in a fourth possible implementation manner of the second aspect, a scrambler generator polynomial corresponding to an OTL signal whose lane number is r in the n OTL signals is $G_r(x) = 1 + X + x^b$, where X is a term of the scrambler generator polynomial other than a highest-degree monomial and a constant term, and is determined according to the lane number r corresponding to the OTL signal; and b is a highest degree of the polynomial that is preconfigured or is delivered to the receiving apparatus by using a network manager, and b is a natural number.

With reference to the second aspect or any one of the first to the fourth possible implementation manners of the second aspect, in a fifth possible implementation manner of the second aspect,
the first acquiring unit is specifically configured to: demultiplex m received multiplexed lane signals to restore c*n logical lanes, and restore the n OTL signals from the c*n logical lanes; or demultiplex m received multiplexed lane signals to restore the n OTL signals.

With reference to the second aspect or any one of the first to the fifth possible implementation manners of the second aspect, in a sixth possible implementation manner of the second aspect, the receiving apparatus further includes:

a third acquiring unit, configured to acquire a lane number of each OTL signal and a polynomial number of each scrambler generator polynomial; and
a searching unit, configured to search for, according to the lane number of each OTL signal and the polynomial number of each scrambler generator polynomial, a scrambler generator polynomial corresponding to each OTL signal.

With reference to the second aspect or any one of the first to the sixth possible implementation manners of the second aspect, in a seventh possible implementation manner of the second aspect, the receiving apparatus further includes:

a correspondence management unit, configured to store a correspondence between the n OTL signals and the n unrelated scrambler generator polynomials; or configured to acquire a correspondence between the n OTL signals and the n unrelated scrambler generator polynomials from the network manager or a sending apparatus sending the OTUCn signal, where the correspondence describes a scrambler generator polynomial used when scrambling processing is performed on each OTL signal; and
accordingly, the descrambling unit is specifically configured to select a corresponding scrambler generator polynomial for each OTL signal according to the correspondence, so as to perform descrambling processing.

According to a third aspect, a method for signal transmission in an optical transport network is provided, including:

receiving an OTUCn optical channel transport unit signal, and distributing the OTUCn signal as n OTL optical channel transport lane signals, where n is an integer greater than or equal to 2;
separately performing scrambling processing on the n OTL signals based on n unrelated scrambler generator polynomials, where the n unrelated scrambler generator polynomials are n scrambler generator polynomials that have no common factor; and
transporting the scrambled OTL signals to a receiving apparatus over subcarriers.

In a first possible implementation manner of the third aspect, after the receiving an OTUCn optical channel transport unit signal, and distributing the OTUCn signal as n OTL optical channel transport lane signals, the method further includes:

acquiring the n unrelated scrambler generator polynomials according to an OTL signal quantity n.

According to a first possible implementation manner of the third aspect, in a second possible implementation manner of the third aspect, the acquiring the n unrelated scrambler generator polynomials according to an OTL signal quantity n specifically includes:

acquiring the n unrelated scrambler generator polynomials from a preconfigured scrambler generator polynomial repository according to the OTL signal quantity n, where at least n unrelated scrambler generator polynomials are stored in the scrambler generator polynomial repository.

According to a first possible implementation manner of the third aspect, in a third possible implementation manner of the third aspect, the acquiring the n unrelated scrambler generator polynomials according to an OTL signal quantity n specifically includes:

determining a highest degree of the scrambler generator polynomial;
determining all prime numbers that are less than the highest degree of the scrambler generator polynomial; and
generating the n unrelated scrambler generator polynomials according to the OTL signal quantity n, where degrees of all terms of each scrambler generator polynomial except a highest-degree term and a constant term are numbers in all the prime numbers, and any two polynomials are different.

With reference to the third aspect or any one of the first to the third possible implementation manners of the first aspect, in a fourth possible implementation manner of the third aspect, a scrambler generator polynomial corresponding to an OTL signal whose lane number is r in the n OTL signals is $G_r(x) = 1 + X + x^b$, where X is a term of the scrambler generator polynomial other than a highest-degree monomial and a constant term, and is determined according to the lane number r corresponding to the OTL signal; and b is a highest degree of the polynomial that is preconfigured or is delivered to the sending apparatus by using a network manager, and b is a natural number.

With reference to the third aspect or any one of the first to the fourth possible implementation manners of the third aspect, in a fifth possible implementation manner of the third aspect, the transporting the scrambled OTL signals to a receiving apparatus over subcarriers specifically includes:

splitting each scrambled OTL signal into c logical lanes, to obtain c*n logical lanes in total, where c is a natural number;
multiplexing the c*n logical lanes into m multiplexed lane signals; and
transporting the m multiplexed lane signals to the receiving apparatus over the subcarriers.

According to the fifth possible implementation manner of the third aspect, in a sixth possible implementation manner of the third aspect, each of the m multiplexed lane signals is obtained by multiplexing at least two logical lanes, and the two logical lanes are not logical lanes split from a same scrambled OTL signal.

With reference to the third aspect or any one of the first to the fourth possible implementation manners of the third aspect, in a seventh possible implementation manner of the third aspect, the transporting the scrambled OTL signals to a receiving apparatus over subcarriers specifically includes:

multiplexing the n scrambled OTL signals into m multiplexed lane signals; and
transporting the m multiplexed lane signals to the receiving apparatus over the subcarriers.

With reference to the third aspect or any one of the first to seventh possible implementation manners of the third aspect, in an eighth possible implementation manner of the third aspect, the method further includes:

storing a correspondence between the n OTL signals and the n unrelated scrambler generator polynomials; or generating a correspondence between the n OTL signals and the n unrelated scrambler generator polynomials; or obtaining a correspondence between the n OTL signals and the n unrelated scrambler generator polynomials from the network manager, where
the correspondence describes a scrambler generator polynomial used for each OTL signal when each OTL signal is scrambled.

According to the eighth possible implementation manner of the third aspect, in a ninth possible implementation manner of the third aspect, the separately performing scrambling processing on the n OTL signals based on each of n unrelated scrambler generator polynomials specifically includes:

selecting a corresponding scrambler generator polynomial for each OTL signal according to the correspondence, so as to perform scrambling processing.

According to a fourth aspect, a method for signal transmission in an optical transport network is provided, including:

acquiring n OTL optical channel transport lane signals, where the n OTL signals are distributed from one OTUCn optical channel transport unit signal, and n is greater than or equal to 2;
separately performing descrambling processing on the n OTL signals based on n unrelated scrambler generator polynomials, where the n unrelated scrambler generator polynomials are n scrambler generator polynomials that have no common factor; and

reassembling the n descrambled OTL signals into one OTUCn optical channel transport unit signal.

In a first possible implementation manner of the fourth aspect, after the acquiring OTL optical channel transport lane signals, the method further includes:

acquiring the n unrelated scrambler generator polynomials according to an OTL signal quantity n.

According to a first possible implementation manner of the fourth aspect, in a third possible implementation manner of the fourth aspect, the acquiring the n unrelated scrambler generator polynomials according to an OTL signal quantity n specifically includes:

acquiring the n unrelated scrambler generator polynomials from a preconfigured scrambler generator polynomial repository according to the OTL signal quantity n, where at least n unrelated scrambler generator polynomials are stored in the scrambler generator polynomial repository.

According to a first possible implementation manner of the fourth aspect, in a third possible implementation manner of the fourth aspect, the acquiring the n unrelated scrambler generator polynomials according to an OTL signal quantity n specifically includes:

determining a highest degree of the scrambler generator polynomial;
determining all prime numbers that are less than the highest degree of the scrambler generator polynomial; and
generating the n unrelated scrambler generator polynomials according to the OTL signal quantity n, where
degrees of all terms of each scrambler generator polynomial except a highest-degree term and a constant term are numbers in all the prime numbers, and any two polynomials are different.

With reference to the fourth aspect or any one of the first to the third possible implementation manners of the fourth aspect, in a fourth possible implementation manner of the fourth aspect, a scrambler generator polynomial corresponding to an OTL signal whose lane number is r in the n OTL signals is $G_r(x) = 1 + X + x^b$, where X is a term of the scrambler generator polynomial other than a highest-degree monomial and a constant term, and is determined according to the lane number r corresponding to the OTL signal; and b is a highest degree of the polynomial that is preconfigured or is delivered to the receiving apparatus by using a network manager, and b is a natural number.

With reference to the fourth aspect or any one of the first to the fourth possible implementation manners of the fourth aspect, in a fifth possible implementation manner of the fourth aspect, the acquiring n OTL optical channel transport lane signals specifically includes:

demultiplexing m received multiplexed lane signals to restore c*n logical lanes, and restoring the n OTL signals from the c*n logical lanes; or demultiplexing m received multiplexed lane signals to restore the n OTL signals.

With reference to the fourth aspect or any one of the first to the fifth possible implementation manners of the fourth aspect, in a sixth possible implementation manner of the fourth aspect, after the acquiring OTL optical channel transport lane signals, the method further includes:

acquiring a lane number of each OTL signal and a polynomial number of each scrambler generator polynomial; and
searching for, according to the lane number of each OTL signal and the polynomial number of each scrambler generator polynomial, a scrambler generator polynomial corresponding to each OTL signal.

With reference to the fourth aspect or any one of the first to the sixth possible implementation manners of the fourth aspect, in a seventh possible implementation manner of the fourth aspect, the method further includes:

storing a correspondence between the n OTL signals and the n unrelated scrambler generator polynomials; or generating a correspondence between the n OTL signals and the n unrelated scrambler generator polynomials; or obtaining a correspondence between the n OTL signals and the n unrelated scrambler generator polynomials from the network manager, where
the correspondence describes a scrambler generator polynomial used for each OTL signal when each OTL signal is scrambled.

According to a fifth aspect, a sending device is provided, including:

a communication unit, configured to communicate with an external device; and
a processor, configured to:

receive an OTUCn optical channel transport unit signal, and distribute the OTUCn signal as n OTL optical channel transport lane signals, where n is an integer greater than or equal to 2; separately perform scrambling processing on the n OTL signals based on n unrelated scrambler generator polynomials, where the n unrelated scrambler generator polynomials are n scrambler generator polynomials that have no common factor; and

transport the scrambled OTL signals to a receiving apparatus over subcarriers.

In a first possible implementation manner of the fifth aspect,

the processor is further configured to acquire the n unrelated scrambler generator polynomials according to an OTL signal quantity n.

According to the first possible implementation manner of the fifth aspect, in a second possible implementation manner of the fifth aspect,

the processor acquires the n unrelated scrambler generator polynomials according to the OTL signal quantity n and is specifically configured to acquire the n unrelated scrambler generator polynomials from a preconfigured scrambler generator polynomial repository according to the OTL signal quantity n, where at least n unrelated scrambler generator polynomials are stored in the scrambler generator polynomial repository.

According to the first possible implementation manner of the fifth aspect, in a third possible implementation manner of the fifth aspect,

the processor acquires the n unrelated scrambler generator polynomials according to the OTL signal quantity n and is specifically configured to: determine a highest degree of the scrambler generator polynomial; determine all prime numbers that are less than the highest degree of the scrambler generator polynomial; and generate the n unrelated scrambler generator polynomials according to the OTL signal quantity n, where degrees of all terms of each scrambler generator polynomial except a highest-degree term and a constant term are numbers in all the prime numbers, and any two polynomials are different.

With reference to the fifth aspect or any one of the first to the third possible implementation manners of the first aspect, in a fourth possible implementation manner of the fifth aspect, a scrambler generator polynomial corresponding to an OTL signal whose lane number is r in the n OTL signals is $G_r(x) = 1 + X + x^b$, where X is a term of the scrambler generator polynomial other than a highest-degree monomial and a constant term, and is determined according to the lane number r corresponding to the OTL signal; and b is a highest degree of the polynomial that is preconfigured or is delivered to the sending apparatus by using a network manager, and b is a natural number.

With reference to the fifth aspect or any one of the first to the fourth possible implementation manners of the fifth aspect, in a fifth possible implementation manner of the fifth aspect,

the processor transports the scrambled OTL signals to the receiving apparatus over the subcarriers and is specifically configured to: split each scrambled OTL signal into c logical lanes, to obtain c*n logical lanes in total, where c is a natural number; multiplex the c*n logical lanes into m multiplexed lane signals; and transport the m multiplexed lane signals to the receiving apparatus over the subcarriers.

According to the fifth possible implementation manner of the fifth aspect, in a sixth possible implementation manner of the fifth aspect, each of the m multiplexed lane signals is obtained by multiplexing at least two logical lanes, and the two logical lanes are not logical lanes split from a same scrambled OTL signal.

With reference to the fifth aspect or any one of the first to the fourth possible implementation manners of the fifth aspect, in a seventh possible implementation manner of the fifth aspect,

the processor transports the scrambled OTL signals to the receiving apparatus over the subcarriers and is specifically configured to: multiplex the n scrambled OTL signals into m multiplexed lane signals; and transport the m multiplexed lane signals to the receiving apparatus over the subcarriers.

With reference to the fifth aspect or any one of the first to seventh possible implementation manners of the fifth aspect, in an eighth possible implementation manner of the fifth aspect,

the processor is further configured to: store a correspondence between the n OTL signals and the n unrelated scrambler generator polynomials; or generate a correspondence between the n OTL signals and the n unrelated scrambler generator polynomials; or obtain a correspondence between the n OTL signals and the n unrelated scrambler generator polynomials from the network manager, where

the correspondence describes a scrambler generator polynomial used for each OTL signal when each OTL signal is scrambled.

According to the eighth possible implementation manner of the fifth aspect, in a ninth possible implementation manner of the fifth aspect, the processor separately performs scrambling processing on the n OTL signals based on each of the n unrelated scrambler generator polynomials and is specifically configured to select a corresponding scrambler generator polynomial for each OTL signal according to the correspondence, so as to perform scrambling processing.

According to a sixth aspect, a receiving device is provided, including:

a communication unit, configured to communicate with an external device; and
a processor, configured to:

acquire n OTL optical channel transport lane signals, where the n OTL signals are distributed from one OTUCn optical channel transport unit signal, and n is greater than or equal to 2;
separately performing descrambling processing on the n OTL signals based on n unrelated scrambler generator polynomials, where the n unrelated scrambler generator polynomials are n scrambler generator polynomials that have no common factor; and

reassemble the n descrambled OTL signals into one OTUCn optical channel transport unit signal.

In a first possible implementation manner of the sixth aspect,

the processor is further configured to acquire the n unrelated scrambler generator polynomials according to an OTL signal quantity n.

According to the first possible implementation manner of the sixth aspect, in a third possible implementation manner of the sixth aspect,

the processor acquires the n unrelated scrambler generator polynomials according to the OTL signal quantity n and is specifically configured to acquire the n unrelated scrambler generator polynomials from a preconfigured scrambler generator polynomial repository according to the OTL signal quantity n, where at least n unrelated scrambler generator polynomials are stored in the scrambler generator polynomial repository.

According to the first possible implementation manner of the sixth aspect, in a third possible implementation manner of the sixth aspect,

the processor acquires the n unrelated scrambler generator polynomials according to the OTL signal quantity n and is specifically configured to: determine a highest degree of the scrambler generator polynomial; determine all prime numbers that are less than the highest degree of the scrambler generator polynomial; and generate the n unrelated scrambler generator polynomials according to the OTL signal quantity n, where degrees of all terms of each scrambler generator polynomial except a highest-degree term and a constant term are numbers in all the prime numbers, and any two polynomials are different.

With reference to the sixth aspect or any one of the first to the third possible implementation manners of the sixth aspect, in a fourth possible implementation manner of the sixth aspect, a scrambler generator polynomial corresponding to an OTL signal whose lane number is r in the n OTL signals is $G_r(x) = 1 + X + x^b$, where X is a term of the scrambler generator polynomial other than a highest-degree monomial and a constant term, and is determined according to the lane number r corresponding to the OTL signal; and b is a highest degree of the polynomial that is preconfigured or is delivered to the receiving apparatus by using a network manager, and b is a natural number.

With reference to the sixth aspect or any one of the first to the fourth possible implementation manners of the sixth aspect, in a fifth possible implementation manner of the sixth aspect,

the processor acquires the n OTL optical channel transport lane signals and is specifically configured to: demultiplex m received multiplexed lane signals to restore c*n logical lanes, and restore the n OTL signals from the c*n logical lanes; or demultiplex m received multiplexed lane signals to restore the n OTL signals.

With reference to the sixth aspect or any one of the first to the fifth possible implementation manners of the sixth aspect, in a sixth possible implementation manner of the sixth aspect,

the processor is further configured to: acquire a lane number of each OTL signal and a polynomial number of each scrambler generator polynomial; and search for, according to the lane number of each OTLOTL signal and the polynomial number of each scrambler generator polynomial, a scrambler generator polynomial corresponding to each OTL signal.

With reference to the sixth aspect or any one of the first to the sixth possible implementation manners of the sixth aspect, in a seventh possible implementation manner of the sixth aspect, the processor is further configured to: store a correspondence between the n OTL signals and the n unrelated scrambler generator polynomials; or generate a correspondence between the n OTL signals and the n unrelated scrambler generator polynomials; or obtain a correspondence between the n OTL signals and the n unrelated scrambler generator polynomials from the network manager, where

the correspondence describes a scrambler generator polynomial used for each OTL signal when each OTL signal is scrambled.

According to a seventh aspect, a system for signal transmission in an optical transport network is provided, where the system includes: a sending apparatus and a receiving apparatus, where the sending apparatus is any one of the foregoing sending apparatuses, and the receiving apparatus is any one of the foregoing receiving apparatuses.

According to an eighth aspect, a system for signal transmission in an optical transport network is provided, where the system includes: a sending device and a receiving device, where the sending device is any one of the foregoing sending devices, and the receiving device is any one of the foregoing receiving devices.

According to the method, apparatus, and system for signal transmission in an optical transport network provided in the embodiments of the present invention, a same scrambler generator polynomial generation policy is set at a transmit end and a receive end, so that the transmit end and the receive end can generate a corresponding scrambler generator polynomial for each OTL signal according to the scrambler generator polynomial generation policy, and scrambling or descrambling processing can be performed on the OTL signal according to the corresponding scrambler generator polynomial.

In the prior art, the transmit end only performs bit multiplexing on n OTL signals and then sends the n bit-multiplexed OTL signals to the receive end, but does not perform scrambling processing on an OTUCn signal or OTL signals obtained through splitting. Therefore, when bit multiplexing is performed on multiple OTL signals, long 0s or long 1s in an original data flow of an OTL signal are extended, and further, the receive end cannot restore a correct signal data flow. Based on the foregoing description, a potential solution is as follows: Before an OTUCn signal is split into OTL signals, scrambling is directly performed on the OTUCn signal. Although this solution avoids long 0s or long 1s that may occur in an original data flow of the OTUCn signal at first, variability of an OTUCn rate causes a great difficulty in design and implementation, and the solution cannot be implemented. Another potential solution is as follows: Scrambling processing is performed by using a same scrambler generator polynomial on n OTL signals obtained through splitting, but when multiple OTL signals are processed in a same scrambling manner concurrently, and logical lanes split from different OTL signals are multiplexed into one physical lane, long 0s or long 1s may still occur in a data flow transmitted over the physical lane.

The present invention is different. In the present invention, scrambling processing is performed on the n OTL signals by using n pre-acquired unrelated scrambler generator polynomials, that is, an original data flow of an OTL signal is re-coded by using a scrambler generator polynomial. In a data flow of a scrambled OTL signal, consecutive 0s or consecutive 1s in the original data flow are avoided. In addition, because the n scrambler generator polynomials are unrelated to each other, even if logical lanes split from different OTL signals are multiplexed into one physical lane, long 0s or long 1s do not occur in a data flow transmitted over the physical lane, thereby further ensuring that the receive end can correctly restore the OTUCn signal.

## BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.

FIG. 1 is a schematic diagram of a frame structure of an OTUCn frame according to an embodiment of the present invention;
FIG. 2 is a schematic diagram of a frame structure of another OTUCn frame according to an embodiment of the present invention;
FIG. 3 is a schematic diagram of a frame structure of an OTL frame according to an embodiment of the present invention;
FIG. 4 is a schematic diagram of a frame structure of another OTL frame according to an embodiment of the present invention;
FIG. 5 is a schematic apparatus diagram of a sending apparatus according to an embodiment of the present invention;
FIG. 6 is a schematic apparatus diagram of another sending apparatus according to an embodiment of the present invention;
FIG. 7 is a schematic apparatus diagram of still another sending apparatus according to an embodiment of the present invention;
FIG. 8 is a schematic apparatus diagram of yet another sending apparatus according to an embodiment of the present invention;
FIG. 9 is a schematic apparatus diagram of a receiving apparatus according to an embodiment of the present invention;
FIG. 10 is a schematic apparatus diagram of another receiving apparatus according to an embodiment of the present invention;
FIG. 11 is a schematic apparatus diagram of still another receiving apparatus according to an embodiment of the present invention;
FIG. 12 is a schematic flowchart of a method for signal transmission in an optical transport network according to an embodiment of the present invention;
FIG. 13 is a schematic flowchart of another method for signal transmission in an optical transport network according to an embodiment of the present invention;
FIG. 14 is a schematic flowchart of still another method for signal transmission in an optical transport network according to an embodiment of the present invention;
FIG. 15 is a schematic diagram of an OTL signal scrambling circuit according to an embodiment of the present invention;
FIG. 16 is a schematic diagram of another OTL signal scrambling circuit according to an embodiment of the present invention;
FIG. 17 is a schematic diagram of multiplexing 16 OTLC1.16 logical lanes into 4 physical lanes according to an embodiment of the present invention;
FIG. 18 is a schematic flowchart of yet another method for signal transmission in an optical transport network according to an embodiment of the present invention;
FIG. 19 is a schematic apparatus diagram of a sending device according to another embodiment of the present invention;
FIG. 20 is a schematic apparatus diagram of a receiving device according to another embodiment of the present invention;
FIG. 21 is a schematic system diagram of a system for signal transmission in an optical transport network according to an embodiment of the present invention; and
FIG. 22 is a schematic system diagram of another system for signal transmission in an optical transport network according to an embodiment of the present invention.

**DESCRIPTION OF EMBODIMENTS**

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

Embodiments of the present invention are applied to an OTN. The OTN can implement flexible scheduling and management of a large-capacity service. However, with an increase of Internet service traffic, a traditional OTN technology cannot meet a continuous increase of bandwidth in the future. Therefore, the SG15/ITU-T currently discusses formulation of a flexible line-rate OTUCn, where an OTUCn signal may be distributed as n OTL signals. In an embodiment, a rate of each OTL signal is at a rate level of 100 Gbit/s, the OTL signal at the rate level of 100 Gbit/s is referred to as an OTLC1 signal, and n OTLC1 signals are sequentially numbered OTLC1 #1, OTLC1 #2, ..., and OTLC1 #n. The foregoing n OTLC1 signals obtained through splitting may be transported over m subcarriers or optical signals, where $n \geq m$, and n is an integer multiple of m. Correspondingly, there are n ODLC1 signals (Optical Channel Data Lane-C1, optical channel data lane-C1), sequentially numbered ODLC1 #1, ODLC1 #2, ..., and ODLC1 #n, and there are n OPLC1 (Optical Channel Payload Lane-C1, optical channel payload lane-C1) signals, sequentially numbered OPLC1 #1, OPLC1 #2, ..., and OPLC1 #n. "C" in the foregoing mentioned OTUCn, OTLC1, ODLC1, and OPLC1 is a Roman numeral 100.

Exemplarily, an OTUCn frame structure of the OTUCn signal in the embodiments of the present invention may be specifically either of the following two frame structures:

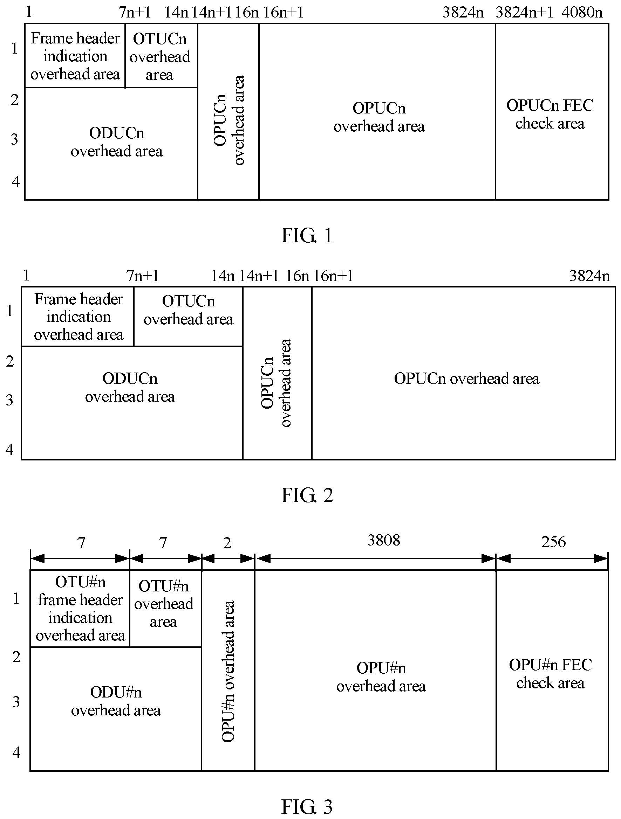

A frame structure of a first OTUCn frame is shown in FIG. 1. The frame structure of the OTUCn frame has four rows and 4080*n columns, where columns 1-7n in the first row are frame header indication overheads, columns (7n+1)-14n in the first row are an OTUCn overhead area, columns 1-14n in the second to the fourth rows are an ODUCn overhead area, columns (14n+1)-16n in the first to the fourth rows are an OPUCn overhead area, columns (16n+1)-3824n in the first to the fourth rows are an OPUCn payload area, and columns (3824n+1)-4080n in the first to the fourth rows are an OTUCn FEC check area.

Correspondingly, based on the frame structure of the OTUCn frame of the OTUCn signal shown in FIG. 1, a frame structure of an OTL frame of an OTL signal obtained through splitting and corresponding to the OTUCn signal is shown in FIG. 2. The OTL frame structure has four rows and 4080 columns, where columns 1-7 in the first row are frame header indication overheads, columns 8-14 in the first row are an OTL overhead area, columns 1-14 in the second to the fourth rows are an ODL overhead area, columns 15-16 in the first to the fourth rows are an OPU overhead area, columns 17-3824 in the first to the fourth rows are an OPU payload area, and columns 3825-4080 in the first to the fourth rows are an OTU FEC check area.

A frame structure of a second OTUCn frame is shown in FIG. 3. The frame structure of the OTUCn frame has no FEC check area, and the frame structure of the OTUCn frame has four rows and 3824*n columns, where columns 1-7n in the first row are frame header indication overheads, columns (7n+1)-14n in the first row are an OTUCn overhead area, columns 1-14n in the second to the fourth rows are an ODUCn overhead area, columns (14n+1)-16n in the first to the fourth rows are an OPUCn overhead area, and columns (16n+1)-3824n in the first to the fourth rows are an OPUCn payload area.

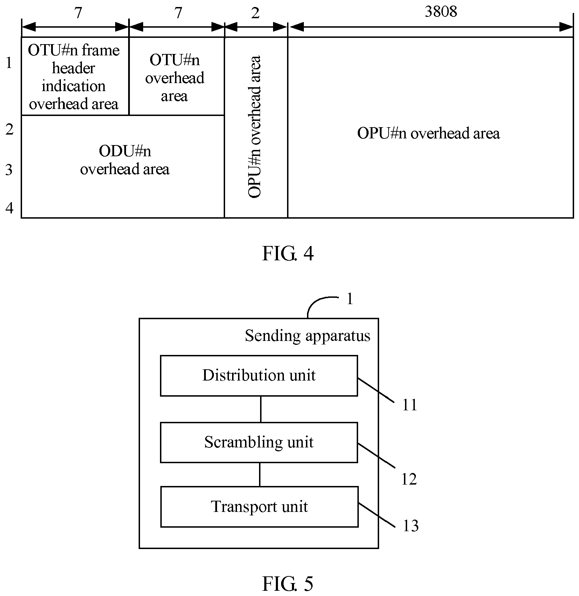

Correspondingly, based on the frame structure of the OTUCn frame of the OTUCn signal shown in FIG. 3, a frame structure of an OTL frame of an OTL signal obtained through splitting and corresponding to the OTUCn signal is shown in FIG. 4. The OTL frame structure has no FEC check area, and the frame structure of the OTL frame has four rows and 3824 columns, where columns 1-7 in the first row are frame header indication overheads, columns 8-14 in the first row are an OTL overhead area, columns 1-14 in the second to the fourth rows are an ODU overhead area, columns 15-16 in the first to the fourth rows are an OPU overhead area, and columns 17-3824 in the first to the fourth rows are an OPU payload area.

Based on the foregoing description, the present invention provides a method, an apparatus, and a system for signal transmission in an optical transport network.

As shown in FIG. 5, an embodiment of the present invention provides a sending apparatus. The sending apparatus 1 specifically includes: a distribution unit 11, a scrambling unit 12, and a transport unit 13.

The distribution unit 11 is configured to: receive an OTUCn optical channel transport unit signal, and distribute the OTUCn signal as n OTL signals, where n is an integer greater than or equal to 2.

The scrambling unit 12 is configured to separately perform scrambling processing on corresponding OTL signals based on n unrelated scrambler generator polynomials.

The foregoing n unrelated scrambler generator polynomials are n scrambler generator polynomials that have no common factor. The n scrambler generator polynomials that have no common factor in the present invention means that any two scrambler generator polynomials cannot be exactly divided by each other.

The transport unit 13 is configured to transport the OTL signals scrambled by the scrambling unit 12 to a receiving apparatus over subcarriers.

In an embodiment, before transporting the scrambled OTL signals to the receiving apparatus over m subcarriers, the transport unit 13 needs to first split each of the n OTL signals into c logical lanes (a parameter c is a natural number), multiplex interleaved bits of c*n logical lanes into m multiplexed lane signals, and finally transport the m multiplexed lane signals to the receiving apparatus over the m subcarriers.

Specifically, the sending apparatus may multiplex the interleaved bits of the c*n logical lanes into the m multiplexed lane signals in two manners: Manner 1: All logical lanes that are multiplexed into one multiplexed lane signal are some or all of the c logical lanes split from one OTL signal. Manner 2: Logical lanes that are multiplexed into one multiplexed lane signal include at least two logical lanes, and the two logical lanes are not logical lanes split from a same OTL signal. For example, the logical lanes that are multiplexed into one multiplexed lane signal include a logical lane 1 and a logical lane 2, where the logical lane 1 is a logical lane split from an OTL#1, the logical lane 2 is a logical lane split from an OTL#2, and the logical lane 1 and the logical lane 2 are logical lanes split from two different OTL signals. Optionally, after distributing the OTUCn signal as the n OTL signals, the sending apparatus may further separately perform FEC coding processing on the n OTL signals by using an FEC coding unit in the sending apparatus.

Specifically, the foregoing FEC coding is a general error correction technology, and is generally used at a transmit end to perform precoding processing on a data flow before the data flow is sent, which can correct an error brought in a transport process and ensure consistency between received data and sent data. An NS (Need Solomon) (255, 239, t=8, m=8) coding scheme is preferably used in the present invention, where a size of one symbol in this coding scheme is 8 bits, that is, m=8; a size of one code word is 255 symbols, that is, 255*8=2040 bits; a size of a valid payload area is 239 symbols, that is, 239*8=1912 bits; and t=8 represents that a maximum of 8 symbol errors can be corrected in one code word.

According to the sending apparatus provided in this embodiment of the present invention, an OTUCn signal is distributed as n OTL lane signals, scrambling processing is separately performed on corresponding OTL signals according to n unrelated scrambler generator polynomials, and finally the scrambled OTL signals are transported to a receiving apparatus over subcarriers.

In the prior art, the sending apparatus only performs bit multiplexing on the n OTL signals and then sends the n bit-multiplexed OTL signals to the receiving apparatus, but does not perform scrambling processing on the OTUCn signal or the OTL signals obtained through splitting. Therefore, long 0s or long 1s may occur in line transmission, and further, a receive end cannot restore a correct signal data flow. In the solution provided in the present invention, scrambling processing is performed on the n OTL signals by using the n pre-acquired unrelated scrambler generator polynomials, that is, an original data flow of an OTL signal is re-coded according to a scrambler generator polynomial. In a data flow of a scrambled OTL signal, consecutive 0s or consecutive 1s in the original data flow are avoided. In addition, consecutive 0s or consecutive 1s that occur when logical lanes split from different OTL signals are multiplexed into one multiplexed lane signal can be avoided. Therefore, long 0s or long 1s that occur in a line are avoided, thereby further ensuring that the receive end can correctly restore the data flow.

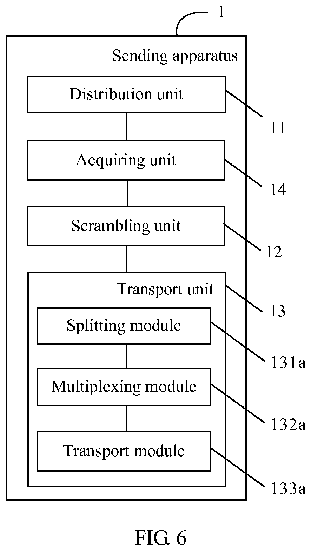

Optionally, as shown in FIG. 6, the sending apparatus 1 further includes: an acquiring unit 14, configured to acquire the n unrelated scrambler generator polynomials according to an OTL signal quantity n.

Exemplarily, the acquiring unit 14 may acquire the n unrelated scrambler generator polynomials according to the OTL signal quantity n in the following two implementation manners:

In a first implementation manner, the acquiring unit 14 acquires the n unrelated scrambler generator polynomials based on a pre-established scrambler generator polynomial repository.

Optionally, the acquiring unit 14 is specifically configured to acquire the n unrelated scrambler generator polynomials from a preconfigured scrambler generator polynomial repository according to the OTL signal quantity n, where at least n unrelated scrambler generator polynomials are stored in the scrambler generator polynomial repository.

In a second implementation manner, the acquiring unit 14 acquires the n unrelated scrambler generator polynomials based on a preconfigured scrambler generator polynomial generation policy.

Optionally, the acquiring unit 14 is specifically configured to: determine a highest degree of the scrambler generator polynomial; determine all prime numbers that are less than the highest degree of the scrambler generator polynomial; and generate the n unrelated scrambler generator polynomials according to the OTL signal quantity n, where degrees of all terms of each scrambler generator polynomial except a highest-degree term and a constant term are numbers in all the prime numbers, and any two polynomials are different.

Exemplarily, a scrambler generator polynomial corresponding to an OTL signal whose lane number is r in the n OTL signals is $G_r(x) = 1 + X + x^b$, where X is a term of the scrambler generator polynomial other than a highest-degree monomial and a constant term, and is determined according to the lane number r of the OTL signal; and the foregoing parameter b is a highest degree of the scrambler generator polynomial and is preconfigured or is delivered to the sending apparatus by using a network manager, and the parameter b is a natural number. In addition, a lane number value may be assigned to each OTL signal to differentiate OTL signals. How to assign a number value is not limited in the present invention. For example, integers from 1 to n may be respectively used as lane number values of the n OTL signals, or n different integers may be randomly selected as lane number values of the n OTL signals, or OTUCn ID values corresponding to n OTL signal may be used as lane number values of the n OTL signals.

Optionally, as shown in FIG. 6, the transport unit 13 includes: a splitting module 131a, a multiplexing module 132a, and a transport module 133a.

The splitting module 143a is configured to split each scrambled OTL signal obtained by the scrambling unit 12 into c logical lanes, to obtain c*n logical lanes in total, where c is a natural number.

The first multiplexing module 132a is configured to multiplex, into m multiplexed lane signals, the c*n logical lanes obtained through splitting by the splitting module 131a.

Exemplarily, that the foregoing multiplexing module 132a multiplexes the c*n logical lanes into the m multiplexed lane signals means that the c*n logical lanes are divided into m equal parts in any combination manner, each equal part includes (c*n)/m logical lanes, and the (c*n)/m logical lanes in each equal part are multiplexed into one multiplexed lane signal, where the foregoing parameter c is a natural number. The first multiplexing module 132a may multiplex the c*n logical lanes into the m multiplexed lane signals in either of the following two manners: Manner 1: All logical lanes that are multiplexed into one multiplexed lane signal are some or all of the c logical lanes split from one OTL signal. Manner 2: Logical lanes that are multiplexed into one multiplexed lane signal include at least two logical lanes, and the two logical lanes are not logical lanes split from a same OTL signal. For example, the logical lanes that are multiplexed into one multiplexed lane signal include a logical lane 1 and a logical lane 2, where the logical lane 1 is a logical lane split from an OTL#1, the logical lane 2 is a logical lane split from an OTL#2, and the logical lane 1 and the logical lane 2 are logical lanes split from two different OTL signals. In an embodiment, the first multiplexing module 132a includes at least one multiplexing submodule, and the multiplexing submodule multiplexes logical lanes into one multiplexed lane signal in Manner 2.

The transport module 133a is configured to transport the m multiplexed lane signals obtained by means of multiplexing by the multiplexing module 132a to the receiving apparatus over m subcarriers.

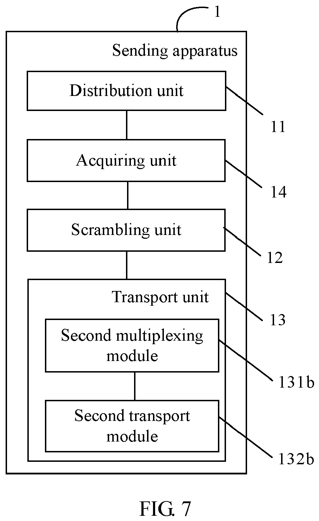

Optionally, as shown in FIG. 7, the transport unit 13 includes: a second multiplexing module 131b and a second transport module 132b.

The second multiplexing module 131b is configured to multiplex the n scrambled OTL signals into m multiplexed lane signals.

The second transport module 132b is configured to transport the m multiplexed lane signals obtained by means of multiplexing by the second multiplexing module 131b to the receiving apparatus over subcarriers.

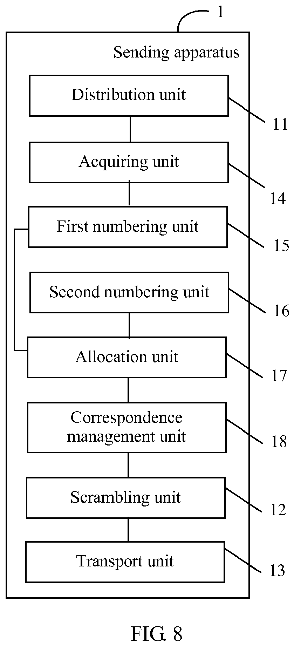

Optionally, as shown in FIG. 8, the sending apparatus 1 further includes: a first numbering unit 15, a second numbering unit 16, and an allocation unit 17.

The first numbering unit 15 is configured to acquire a lane number of each of the n OTL signals, where each OTL signal is corresponding to one lane number.

The second numbering unit 16 is configured to number the n unrelated scrambler generator polynomials, where each scrambler generator polynomial is corresponding to one polynomial number.

The allocation unit 17 is configured to allocate a corresponding scrambler generator polynomial to each OTL signal according to a lane number of the OTL signal and a polynomial number of the scrambler generator polynomial.

Optionally, the sending apparatus 1 may further include:

a correspondence management unit 18, configured to store a correspondence between the n OTL signals and the n unrelated scrambler generator polynomials; or configured to generate a correspondence between the n OTL signals and the n unrelated scrambler generator polynomials; or configured to obtain a correspondence between the n OTL signals and the n unrelated scrambler generator polynomials from the network manager.

The foregoing correspondence describes a scrambler generator polynomial used when each OTL signal is scrambled.

Further, optionally, the scrambling unit 13 in the sending apparatus 1 may select a corresponding scrambler generator polynomial for each OTL signal according to the correspondence from the correspondence management unit, so as to perform scrambling.

Optionally, the correspondence management unit may be further configured to send the correspondence to the network manager or the receiving apparatus. After acquiring the correspondence, the network manager may send the correspondence to the receiving apparatus, so that the receiving apparatus selects the corresponding scrambler generator polynomial for each OTL signal according to this correspondence, so as to perform descrambling.

The sending apparatus provided in this embodiment of the present invention distributes an OTUCn signal as n OTL signals, performs scrambling processing on a corresponding OTL signal according to each of n unrelated scrambler generator polynomials, and finally transports the scrambled OTL signals to a receiving apparatus over subcarriers.

In the prior art, the sending apparatus only performs bit multiplexing on the n OTL signals and then sends the n bit-multiplexed OTL signals to the receiving apparatus, but does not perform scrambling processing on the OTUCn signal or the OTL signals obtained through splitting. Therefore, long 0s or long 1s may occur in line transmission, and further, a receive end cannot restore a correct signal data flow. In the solution provided in the present invention, scrambling processing is performed on the n OTL signals by using the n pre-acquired unrelated scrambler generator polynomials, that is, an original data flow of an OTL signal is re-coded according to a scrambler generator polynomial. In a data flow of a scrambled OTL signal, consecutive 0s or consecutive 1s in the original data flow are avoided. In addition, consecutive 0s or consecutive 1s that occur when logical lanes split from different OTL signals are multiplexed into one multiplexed lane signal can be avoided. Therefore, long 0s or long 1s that occur in a line are avoided, thereby further ensuring that the receive end can correctly restore the data flow.

The unit division of the sending apparatus in this embodiment of the present invention is an exemplary description, and in practice, there may be multiple unit division methods for constituting the sending apparatus in this embodiment of the present invention.

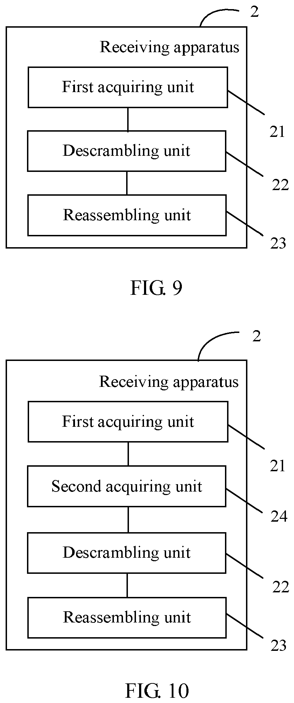

Corresponding to the sending apparatus provided in this embodiment of the present invention, an embodiment of the present invention further provides a receiving apparatus. As shown in FIG. 9, the receiving apparatus 2 includes: a first acquiring unit 21, a descrambling unit 22, and a reassembling unit 23.

The first acquiring unit 21 is configured to acquire n OTL optical channel transport lane signals, where the n OTL signals are distributed from one OTUCn optical channel transport unit signal, and n is greater than or equal to 2.

The descrambling unit 22 is configured to separately perform descrambling processing on the n OTL signals based on n unrelated scrambler generator polynomials.

The foregoing n unrelated scrambler generator polynomials are n scrambler generator polynomials that have no common factor. The n scrambler generator polynomials that have no common factor in the present invention means that any two scrambler generator polynomials cannot be exactly divided by each other.

The reassembling unit 23 is configured to reassemble the n OTL signals descrambled by the descrambling unit 22 into one OTUCn optical channel transport unit signal.

Optionally, after performing descrambling processing on an OTL signal corresponding to each of the n unrelated scrambler generator polynomials, the descrambling unit 22 in the receiving apparatus may further separately perform FEC decoding processing on the n descrambled OTL signals by using a decoding unit in the receiving apparatus.

Specifically, the foregoing FEC coding is a general error correction technology, and is generally used at a receive end to perform decoding processing on a received data flow, which can correct an error brought in a transport process and ensure consistency between received data and sent data. An NS (Need Solomon) (255, 239, t=8, m=8) coding scheme is preferably used in the present invention, where a size of one symbol in this coding scheme is 8 bits, that is, m=8; a size of one code word is 255 symbols, that is, 255*8=2040 bits; a size of a valid payload area is 239 symbols, that is, 239*8=1912 bits; and t=8 represents that a maximum of 8 symbol errors can be corrected in one code word.

The receiving apparatus provided in this embodiment of the present invention acquires n OTLCn optical channel transport lane signals, performs descrambling processing on a corresponding OTL signal according to each of n unrelated scrambler generator polynomials, and reassembles the n descrambled OTL signals into one OTUCn signal.

In the prior art, a sending apparatus only performs bit multiplexing on the n OTL signals and then sends the n bit-multiplexed OTL signals to the receiving apparatus, but does not perform scrambling and descrambling processing on the OTUCn signal or the OTL signals obtained through splitting. Therefore, long 0s or long 1s may occur in line transmission, and further, a receive end cannot restore a correct signal data flow. In the solution provided in the present invention, descrambling processing is performed on the n OTL signals by using the n pre-acquired unrelated scrambler generator polynomials, that is, an original data flow of an OTL signal is re-coded according to a scrambler generator polynomial. In a data flow of a scrambled OTL signal, consecutive 0s or consecutive 1s in the original data flow are avoided. In addition, consecutive 0s or consecutive 1s that occur when logical lanes split from different OTL signals are multiplexed into one multiplexed lane signal can be avoided. Therefore, long 0s or long 1s that occur in a line are avoided, thereby further ensuring that the receive end can correctly restore the data flow.

Optionally, as shown in FIG. 10, the receiving apparatus 2 further includes: a second acquiring unit 24, configured to acquire the n unrelated scrambler generator polynomials according to an OTL signal quantity n.

Exemplarily, the second acquiring unit 24 may acquire the n unrelated scrambler generator polynomials based on the OTL signal quantity n in the following two implementation manners:

In a first implementation manner, the second acquiring unit 24 acquires the n unrelated scrambler generator polynomials based on a pre-established scrambler generator polynomial repository.

Optionally, the second acquiring unit 24 is specifically configured to acquire the n unrelated scrambler generator polynomials from a preconfigured scrambler generator polynomial repository according to the OTL signal quantity n, where at least n unrelated scrambler generator polynomials are stored in the scrambler generator polynomial repository.

In a second implementation manner, the second acquiring unit 24 acquires the n unrelated scrambler generator polynomials based on a preconfigured scrambler generator polynomial generation policy.

Optionally, the second acquiring unit 24 is specifically configured to: determine a highest degree of the scrambler generator polynomial; determine all prime numbers that are less than the highest degree of the scrambler generator polynomial; and generate the n unrelated scrambler generator polynomials according to the OTL signal quantity n, where degrees of all terms of each scrambler generator polynomial except a highest-degree term and a constant term are numbers in all the prime numbers, and any two polynomials are different.

Exemplarily, a scrambler generator polynomial corresponding to an OTL signal whose lane number is r in the n OTL signals is $G_r(x) = 1 + X + x^b$, where X is a term of the scrambler generator polynomial other than a highest-degree monomial and a constant term, and is determined according to the lane number r of the OTL signal; and the foregoing parameter b is a highest degree of the scrambler generator polynomial and is preconfigured or is delivered to a sending apparatus by using a network manager, and the parameter b is a natural number. A lane number value of each OTL signal may be acquired from overheads of each OTL signal.

Exemplarily, the first acquiring unit 21 is specifically configured to: demultiplex m received multiplexed lane signals to restore c*n logical lanes, and restore the n OTL signals from the c*n logical lanes; or demultiplex m received multiplexed lane signals to restore the n OTL signals. The foregoing parameter c is consistent with a parameter c at a transmit end, and the parameter c is a natural number.

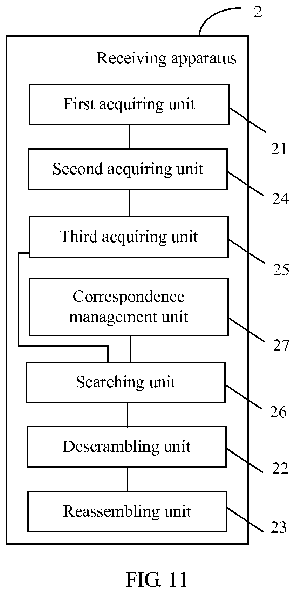

Optionally, as shown in FIG. 11, the receiving apparatus 2 further includes: a third acquiring unit 25 and a searching unit 26.

The third acquiring unit 25 is configured to acquire a lane number of each OTL signal and a polynomial number of each scrambler generator polynomial.

The searching unit 26 is configured to search for, according to the lane number of each OTL signal and the polynomial number of each scrambler generator polynomial, a scrambler generator polynomial corresponding to each OTL signal.

Optionally, the receiving apparatus 2 may further include:

a correspondence management unit 27, configured to: store a correspondence between the n OTL signals and the n unrelated scrambler generator polynomials; or acquire a correspondence between the n OTL signals and the n unrelated scrambler generator polynomials from the network manager or a sending apparatus sending the OTUCn signal, where the foregoing correspondence describes a scrambler generator polynomial used when scrambling processing is performed on each OTL signal.

Accordingly, the descrambling unit 23 is specifically configured to select a corresponding scrambler generator polynomial for each OTL signal according to the foregoing correspondence, so as to perform descrambling processing.

The receiving apparatus provided in this embodiment of the present invention acquires n OTLCn optical channel transport lane signals, performs descrambling processing on a corresponding OTL signal according to each of n unrelated scrambler generator polynomials, and reassembles the n descrambled OTL signals into one OTUCn signal.

In the prior art, a sending apparatus only performs bit multiplexing on the n OTL signals and then sends the n bit-multiplexed OTL signals to the receiving apparatus, but does not perform scrambling and descrambling processing on the OTUCn signal or the OTL signals obtained through splitting. Therefore, long 0s or long 1s may occur in line transmission, and further, a receive end cannot restore a correct signal data flow. In the solution provided in the present invention, descrambling processing is performed on the n OTL signals by using the n pre-acquired unrelated scrambler generator polynomials, that is, an original data flow of an OTL signal is re-coded according to a scrambler generator polynomial. In a data flow of a scrambled OTL signal, consecutive 0s or consecutive 1s in the original data flow are avoided. In addition, consecutive 0s or consecutive 1s that occur when logical lanes split from different OTL signals are multiplexed into one multiplexed lane signal can be avoided. Therefore, long 0s or long 1s that occur in a line are avoided, thereby further ensuring that the receive end can correctly restore the data flow.

The unit division of the receiving apparatus in this embodiment of the present invention is an exemplary description, and in practice, there may be multiple unit division methods for constituting the receiving apparatus in this embodiment of the present invention.

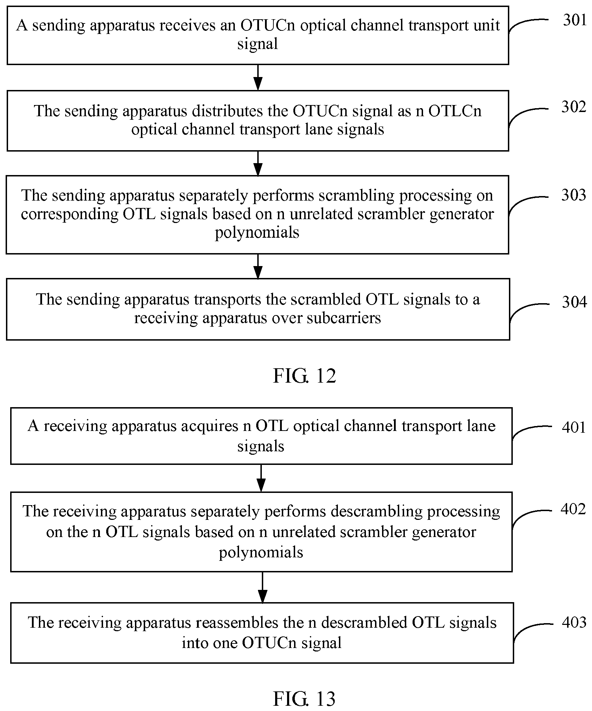

An embodiment of the present invention provides a method for signal transmission in an optical transport network. As shown in FIG. 12, the method is implemented by a sending apparatus. Specifically, this embodiment mainly focuses on a process in which a transmit end transmits a signal to a receive end. The method for signal transmission in an optical transport network specifically includes the following steps:

301. The sending apparatus receives an OTUCn optical channel transport unit signal.

302. The sending apparatus distributes the OTUCn signal as n OTLCn optical channel transport lane signals.

n is an integer greater than or equal to 2. Exemplarily, the OTUCn signal is distributed as the n OTL signals. In an embodiment, the OTL signal is a signal at a rate level of 100 Gbit/s, and the OTL signal is referred to as an OTLC 1. Accordingly, the n OTLC1 signals are numbered OTLC1 #1, OTLC1 #2, ..., and OTLC1 #n. Columns 1-n of OTUCn ID overheads that are located in the first column and the first row of each OTLC1 signal carry number information of the OTLC1.

It should be noted that after distributing the OTUCn signal as the n OTL signals, the sending apparatus may further separately perform forward error correction (Fonwand Ennon Connection, FEC) coding processing on the n OTL signals. Specifically, the foregoing FEC coding is a general error correction technology, and is generally used at a transmit end to perform precoding processing on a data flow before the data flow is sent, which can correct an error brought in a transport process and ensure consistency between received data and sent data. An NS (Need Solomon, Reed-Solomon) (255, 239, t=8, m=8) coding scheme is preferably used in the present invention, where a size of one symbol in this coding scheme is 8 bits, that is, m=8; a size of one code word is 255 symbols, that is, 255*8=2040 bits; a size of a valid payload area is 239 symbols, that is, 239*8=1912 bits; and t=8 represents that a maximum of 8 symbol errors can be corrected in one code word.

303. The sending apparatus performs scrambling processing on a corresponding OTL signal based on each of n unrelated scrambler generator polynomials.

The foregoing n unrelated scrambler generator polynomials are n scrambler generator polynomials that have no common factor. The n scrambler generator polynomials that have no common factor in the present invention means that any two scrambler generator polynomials cannot be exactly divided by each other.

A lane number value may be assigned to each of the foregoing OTL signals to differentiate OTL signals. How to assign a number value is not limited in the present invention. For example, integers from 1 to n may be respectively used as lane number values of the n OTL signals, or n different integers may be randomly selected as lane number values of the n OTL signals, or OTUCn ID values corresponding to n OTL signal may be used as lane number values of the n OTL signals.

Optionally, before performing scrambling processing on the corresponding OTL signal according to each scrambler generator polynomial, the sending apparatus further needs to perform the following steps:

a1. The sending apparatus acquires a lane number of each of the n OTL signals.
a2. The sending apparatus acquires a polynomial number of each of the n unrelated scrambler generator polynomials.
a3. The sending apparatus allocates a corresponding scrambler generator polynomial to each OTL signal according to the lane number of each OTL signal and the polynomial number of each scrambler generator polynomial.

The foregoing lane number of the OTL signal may be an OTUCn ID value that exists in an OTLCn frame, or may be generated after the sending apparatus numbers each OTL signal.

Exemplarily, before performing scrambling processing on the corresponding OTL signal according to each scrambler generator polynomial, the sending apparatus needs to allocate the corresponding scrambler generator polynomial to each OTL signal according to the lane number of each OTL signal and the polynomial number of each scrambler generator polynomial, so that all the n OTL signals sent by the sending apparatus can be scrambled according to different scrambler generator polynomials, further resolving a situation that after concurrent scrambling is performed on all of multiple OTL signals, long 0s or long 1s occur in a line during cross OTL signal multiplexing.

It should be noted that the n unrelated scrambler generator polynomials in step 303 are acquired during initialization before the sending apparatus sends the OTUCn signal, or are hardwired into the sending apparatus before delivery of the sending apparatus.

Optionally, the sending apparatus acquires the n unrelated scrambler generator polynomials according to an OTL signal quantity n in two implementation manners.

b1. The sending apparatus acquires the n unrelated scrambler generator polynomials from a preconfigured scrambler generator polynomial repository according to the OTL signal quantity n.
Alternatively,
b2. The sending apparatus determines a highest degree of the scrambler generator polynomial; determines all prime numbers that are less than the highest degree of the scrambler generator polynomial; and generates the n unrelated scrambler generator polynomials according to the OTL signal quantity n, where degrees of all terms of each scrambler generator polynomial except a highest-degree term and a constant term are numbers in all the prime numbers, and any two polynomials are different.

Exemplarily, the sending apparatus acquires the n unrelated scrambler generator polynomials according to the OTL signal quantity n, where the sending apparatus acquires the n unrelated scrambler generator polynomials $(G_1(x), G_2(x), \ldots\ldots, G_r(x))$ mainly according to the OTL signal quantity n from a pre-established scrambler generator polynomial repository, or by using a preconfigured scrambler generator polynomial generation policy. At least n unrelated scrambler generator polynomials are stored in the foregoing scrambler generator polynomial repository. The foregoing scrambler generator polynomial generation policy may be acquired from configuration information related to the scrambler generator polynomial generation policy delivered by a network manager to the sending apparatus, or may be preconfigured.

It should be noted that after acquiring the n unrelated scrambler generator polynomials, the sending apparatus further needs to acquire a correspondence between the n OTL signals and the n unrelated scrambler generator polynomials, where the correspondence may be generated by the sending apparatus, or may be acquired from the network manager, or may be prestored in the sending apparatus. The correspondence describes a scrambler generator polynomial used when each OTL signal is scrambled.

Exemplarily, a scrambler generator polynomial corresponding to an OTL signal whose lane number is r in the foregoing n OTL signals is $G_r(x) = 1 + X + x^b$, where X is a term of the scrambler generator polynomial other than a highest-degree monomial and a constant term, and is determined according to the lane number r of the OTL signal; and the foregoing parameter b is a highest degree of the scrambler generator polynomial and is preconfigured or is delivered to the sending apparatus by using the network manager, and the parameter b is a natural number.

Manner 1 of acquiring the n unrelated scrambler generator polynomials based on step b1 is as follows: A related scrambler generator polynomial is acquired by using a pre-established scrambler generator polynomial repository shown in Table 1. Specifically, before the foregoing scrambler generator polynomial repository is used, the lane number of each OTL signal needs to be acquired first, and then the corresponding scrambler generator polynomial is acquired from the scrambler generator polynomial repository according to the lane number of each OTL signal.

**Table 1**

| Number | Scrambler generator polynomial |
|---|---|
| 1 | $G_1(x) = 1 + x^{13} + x^{16}$ |
| 2 | $G_2(x) = 1 + x^{11} + x^{16}$ |
| 3 | $G_3(x) = 1 + x^7 + x^{16}$ |
| ... | ... |
| n | $G_r(x) = 1 + X + x^{16}$ |

Manner 2 of acquiring the n unrelated scrambler generator polynomials based on step b2 is as follows:

A related scrambler generator polynomial is acquired by using the pre-established scrambler generator polynomial repository or by using the preconfigured scrambler generator polynomial generation policy. For example:

(1). Determine that the highest degree of the scrambler generator polynomial is 16.
(2). Select a prime number less than 16 (five prime numbers in total: 1, 3, 7, 11, and 13) as another degree, where a scrambler generator polynomial for the n^th lane signal is $G_r(x) = 1 + X + x^{16}$, and X varies with n.

In the first round, one prime number is selected, where one of the prime numbers that are less than 16 is sequentially selected in descending order as a degree, and $C_5^1 = 5$ scrambler generator polynomials can be generated in total. Corresponding scrambler generator polynomials are sequentially acquired according to lane numbers of all OTL signals. For example, for the first OTL signal, a largest prime number that is less than 16 is selected as a degree, that is, $X = x^3$; for the second OTL signal, a second largest prime number that is less than 16 is selected as a degree, that is, $X = x^{11}$; and by analogy, for the fifth OTL signal, a smallest prime number 1 that is less than 16 is selected as a degree, that is, $X = x^1$.

In the second round, two prime numbers are selected, where combinations of two prime numbers that are less than 16 are sequentially selected in descending order as degrees, and $C_5^2 = 10$ scrambler generator polynomials can be generated in total. For the sixth OTL signal, $X = x^{11} + x^{13}$ is selected; for the seventh OTL signal, $X = x^7 + x^{13}$ is selected; for the eighth OTL signal, $X = x^3 + x^{13}$ is selected; for the ninth OTL signal, $X = x^3 + x^{13}$ is selected; for the tenth OTL signal, $X = x^7 + x^{11}$ is selected; and until the fifteenth OTL signal, $X = x^1 + x^5$ is selected.

In the third round, three prime numbers are selected, where combinations of three prime numbers that are less than 16 are sequentially selected in descending order as degrees, and $C_5^3 = 10$ scrambler generator polynomials can be generated in total. By analogy, in the fourth round, four prime numbers are selected, where combinations of four prime numbers that are less than 16 are sequentially selected in descending order as degrees, and $C_5^4 = 5$ scrambler generator polynomials can be generated in total.

Based on the foregoing description, it can be learned that a specific quantity of scrambler generator polynomials that need to be generated by the sending apparatus depends on the OTL signal quantity n.

304. The sending apparatus transports the scrambled OTL signals to a receiving apparatus over subcarriers.

Optionally, step 304 specifically includes the following steps:

304b1. The sending apparatus splits each scrambled OTL signal into c logical lanes, to obtain c*n logical lanes in total, where the foregoing parameter c is a natural number.

304b2. The sending apparatus multiplexes the c*n logical lanes into m multiplexed lane signals.

304a3. The sending apparatus transports the m multiplexed lane signals to the receiving apparatus over the subcarriers.

Exemplarily, interleaved bits of the c*n logical lanes may be multiplexed into the m multiplexed lane signals in step 304b2 in two manners: Manner 1: All logical lanes that are multiplexed into one multiplexed lane signal are some or all of the c logical lanes split from one OTL signal. Manner 2: Logical lanes that are multiplexed into one multiplexed lane signal include at least two logical lanes, and the two logical lanes are not logical lanes split from a same OTL signal. For example, the logical lanes that are multiplexed into one multiplexed lane signal include a logical lane 1 and a logical lane 2, where the logical lane 1 is a logical lane split from an OTL#1, the logical lane 2 is a logical lane split from an OTL#2, and the logical lane 1 and the logical lane 2 are logical lanes split from two different OTL signals.

Exemplarily, that the sending apparatus multiplexes the c*n logical lanes into the m multiplexed lane signals means that the c*n logical lanes are divided into m equal parts in any combination manner, each equal part includes (c*n)/m logical lanes, the (c*n)/m logical lanes in each equal part are multiplexed into one multiplexed lane signal, and the multiplexed lane signal is transported to the receiving apparatus over one subcarrier, where the parameter c is a natural number.

Optionally, step 304 specifically includes the following steps:

304b2. The sending apparatus multiplexes the n scrambled OTL signals into m multiplexed lane signals.

Exemplarily, when multiplexing the n scrambled OTL signals into the m multiplexed lane signals, the sending apparatus may multiplex n/m scrambled OTL signals into one multiplexed lane signal, or may multiplex OTL signals of any quantity into one multiplexed lane signal, that is, quantities of OTL signals in the m multiplexed lane signals varies from each other. For example, there are three OTL signals multiplexed into the first multiplexed lane signal, and there are four OTL signals multiplexed into the second multiplexed lane signal. Alternatively, all the n lane signals may be regarded as a whole and distributed to m lanes in turn, to generate the m multiplexed lane signals.

304b2. Transport the m multiplexed lane signals to the receiving apparatus over the subcarriers.

According to the method for signal transmission in an optical transport network provided in this embodiment of the present invention, an OTUCn signal is distributed as n OTL lane signals, scrambling processing is performed on a corresponding OTL signal according to each of n unrelated scrambler generator polynomials, and finally the scrambled OTL signals are transported to a receiving apparatus over subcarriers.

In the prior art, a sending apparatus only performs bit multiplexing on the n OTL signals and then sends the n bit-multiplexed OTL signals to the receiving apparatus, but does not perform scrambling processing on the OTUCn signal or the OTL signals obtained through splitting. Therefore, long 0s or long 1s may occur in line transmission, and further, a receive end cannot restore a correct signal data flow. In the solution provided in the present invention, scrambling processing is performed on the n OTL signals by using the n unrelated scrambler generator polynomials, that is, an original data flow of an OTL signal is re-coded according to a scrambler generator polynomial. In a data flow of a scrambled OTL signal, consecutive 0s or consecutive 1s in the original data flow are avoided. In addition, consecutive 0s or consecutive 1s that occur when logical lanes split from different OTL signals are multiplexed into one multiplexed lane signal can be avoided. Therefore, long 0s or long 1s that occur in a line are avoided, thereby further ensuring that the receive end can correctly restore the data flow.

An embodiment of the present invention provides a method for signal transmission in an optical transport network. As shown in FIG. 13, the method is implemented by a receiving apparatus. Specifically, this embodiment mainly focuses on a process in which a receive end processes a received signal by carrying scrambling planning. The method for signal transmission in an optical transport network specifically includes the following steps:

401. The receiving apparatus acquires n OTL optical channel transport lane signals.

The foregoing n OTL signals are distributed from one OTUCn optical channel transport unit signal, where n is greater than or equal to 2.

Exemplarily, the OTUCn signal is distributed as the n OTL signals. In an embodiment, the OTL signal is a signal at a rate level of 100 Gbit/s, and is referred to as an OTLC1. Accordingly, the n OTLC1 signals are numbered OTLC1 #1, OTLC1 #2, ..., and OTLC1 #n. OTUCn ID overheads located in the first column and the first row of each OTLC1 signal carry number information of the OTLC1 signal.

It should be noted that when receiving m multiplexed lane signals, the receiving apparatus first needs to demultiplex the received m multiplexed lane signals to restore c*n logical lanes, and restore the n OTL signals from the c*n logical lanes, or directly demultiplexes the m multiplexed lane signals to restore the n OTL signals, then performs descrambling processing on each OTL signal, and reassembles the descrambled OTL signals into one OTUCn signal.

402. The receiving apparatus separately performs descrambling processing on the n OTL signals based on each of n unrelated scrambler generator polynomials.

The foregoing n unrelated scrambler generator polynomials are n scrambler generator polynomials that have no common factor. The n scrambler generator polynomials that have no common factor in the present invention means that any two scrambler generator polynomials cannot be exactly divided by each other.

Optionally, before performing scrambling processing on a corresponding OTL signal according to each scrambler generator polynomial, the receiving apparatus further needs to perform the following steps:

c1. The receiving apparatus acquires a lane number of each OTL signal and a polynomial number of each scrambler generator polynomial.
c2. The receiving apparatus searches for, according to the lane number of each OTL signal and the polynomial number of each scrambler generator polynomial, a scrambler generator polynomial corresponding to each OTL signal.

The foregoing lane number of the OTL signal may be an OTUCn ID that exists in an OTLCn frame, or may be generated after the receiving apparatus numbers each OTL signal.

Exemplarily, before performing scrambling processing on the corresponding OTL signal according to each scrambler generator polynomial, the receiving apparatus needs to acquire the lane number of each OTL signal and the polynomial number of each scrambler generator polynomial, and allocate a scrambler generator polynomial that is the same as that at a transmit end to each OTL signal according to a matching policy that is the same as that at the transmit end, so that the transmit end and the receive end can perform scrambling processing and descrambling processing on each OTL signal according to the same scrambler generator polynomial.

It should be noted that the n unrelated scrambler generator polynomials in step 402 are acquired during initialization before the receiving apparatus receives and acquires the OTL signals, or are fixed in the receiving apparatus before delivery of the receiving apparatus.

Optionally, the receiving apparatus acquires the n unrelated scrambler generator polynomials according to an OTL signal quantity n in two implementation manners.

b1. The receiving apparatus acquires the n unrelated scrambler generator polynomials from a preconfigured scrambler generator polynomial repository according to the OTL signal quantity n.

Alternatively,
b2. The receiving apparatus determines a highest degree of the scrambler generator polynomial; determines all prime numbers that are less than the highest degree of the scrambler generator polynomial; and generates the n unrelated scrambler generator polynomials according to the OTL signal quantity n, where degrees of all terms of each of the foregoing scrambler generator polynomials except a highest-degree term and a constant term are numbers in all the prime numbers, and any two polynomials are different.

Exemplarily, the receiving apparatus acquires the n unrelated scrambler generator polynomials according to the OTL signal quantity n, where the receiving apparatus acquires, mainly according to the OTL signal quantity n, the n unrelated scrambler generator polynomials $(G_1(x),G_2(x),......,G_r(x))$ from a pre-established scrambler generator polynomial repository or by using a preconfigured scrambler generator polynomial generation policy. The n unrelated scrambler generator polynomials are stored in the foregoing scrambler generator polynomial repository. The foregoing scrambler generator polynomial generation policy may be acquired from configuration information related to the scrambler generator polynomial generation policy delivered by a network manager to the receiving apparatus, or may be preconfigured.

It should be noted that after acquiring the n unrelated scrambler generator polynomials, the receiving apparatus further needs to acquire a correspondence between the n OTL signals and the n unrelated scrambler generator polynomials, where the correspondence may be generated by the receiving apparatus, or may be acquired from the network manager or a sending apparatus. The correspondence describes a scrambler generator polynomial used when each OTL signal is scrambled.

Exemplarily, a scrambler generator polynomial corresponding to an OTL signal whose lane number is r in the foregoing n OTL signals is $G_r(x) = 1 + X + x^b$, where X is a term of the scrambler generator polynomial other than a highest-degree monomial and a constant term, and is determined according to the lane number r of the OTL signal; and the foregoing parameter b is a highest degree of the scrambler generator polynomial and is preconfigured or is delivered to the receiving apparatus by using the network manager, and the parameter b is a natural number.

Specifically, this embodiment of the present invention provides two manners of acquiring the n unrelated scrambler generator polynomials, where in Manner 1, the n unrelated scrambler generator polynomials are acquired based on step b1 in the embodiment corresponding to FIG. 12, and in Manner 2, the n unrelated scrambler generator polynomials are acquired based on step b2 in the embodiment corresponding to FIG. 12. Because a specific process of acquiring a scrambler generator polynomial at the transmit end is the same as that at the receive end, and the foregoing two implementation manners are already described in the embodiment, corresponding to FIG. 12, of the method for signal transmission in an optical transport network implemented by the sending apparatus, details are not described herein again.

403. The receiving apparatus reassembles the n descrambled OTL signals into one OTUCn signal.

It should be noted that after performing descrambling processing on the OTL signal corresponding to each of the n unrelated scrambler generator polynomials, the receiving apparatus may separately perform FEC decoding processing on the n descrambled OTL signals. Specifically, the foregoing FEC coding is a general error correction technology, and is generally used at a receive end to perform decoding processing on a received data flow, which can correct an error brought in a transport process and ensure consistency between received data and sent data. An NS (Need Solomon, Reed-Solomon) (255, 239, t=8, m=8) coding scheme is preferably used in the present invention, where a size of one symbol in this coding scheme is 8 bits, that is, m=8; a size of one code word is 255 symbols, that is, 255*8=2040 bits; a size of a valid payload area is 239 symbols, that is, 239*8=1912 bits; and t=8 represents that a maximum of 8 symbol errors can be corrected in one code word.

According to the method for signal transmission in an optical transport network provided in this embodiment of the present invention, an OTUCn signal is distributed as n OTL signals, scrambling processing is performed on a corresponding OTL signal according to each of n unrelated scrambler generator polynomials, and finally the scrambled OTL signals are transported to a receiving apparatus over subcarriers.

In the prior art, a sending apparatus only performs bit multiplexing on the n OTL signals and then sends the n bit-multiplexed OTL signals to the receiving apparatus, but does not perform scrambling processing on the OTUCn signal or the OTL signals obtained through splitting. Therefore, long 0s or long 1s may occur in line transmission, and further, a receive end cannot restore a correct signal data flow. In the solution provided in the present invention, scrambling processing is performed on the n OTL signals by using the n unrelated scrambler generator polynomials, that is, an original data flow of an OTL signal is re-coded according to a scrambler generator polynomial. In a data flow of a scrambled OTL signal, consecutive 0s or consecutive 1s in the original data flow are avoided. In addition, consecutive 0s or consecutive 1s that occur when logical lanes split from different OTL signals are multiplexed into one multiplexed lane signal can be avoided. Therefore, long 0s or long 1s that occur in a line are avoided, thereby further ensuring that the receive end can correctly restore the data flow.

The following specific scenarios exemplarily describe the method for signal transmission in an optical transport network provided in the embodiments of the present invention. In the following embodiments, for descriptions of technical terms, concepts, and the like related to the foregoing embodiments, refer to the foregoing embodiments.

The following embodiments mainly focus on a process in which a transmit end performs scrambling on a signal and then transmits the scrambled signal to a receive end, and a process in which the receive end performs descrambling processing after receiving a scrambled signal. Exemplarily, in this embodiment, due to different scrambling parameters, there are accordingly two specific implementation manners of the provided processes in which the transmit end performs scrambling on a signal and then transmits the scrambled signal to the receive end, and in which the receive end performs descrambling processing after receiving a scrambled signal.

It should be noted that, for example, the OTUCn signal in this embodiment is an OTUCn signal of n*100 G herein, the OTL signal in this embodiment is an OTLC1 signal at a rate level of 100 Gbit/s herein, and n OTLC1 signals are sequentially numbered OTLC1 #1, OTLC1 #2, ..., and OTLC1 #n. In addition, in this embodiment, for example, when the n OTLC 1 signals are split, each OTLC 1 signal is split into four OTLCn.4n logical lanes.

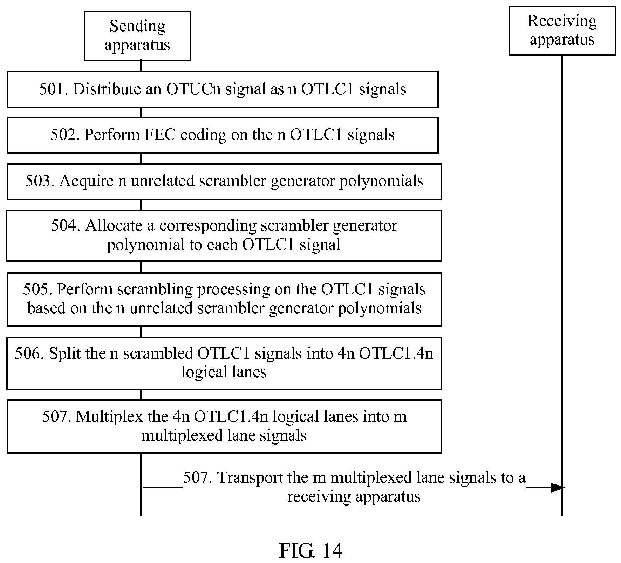

Referring to FIG. 14, a process in which a transmit end transmits a signal to a receive end by carrying scrambling planning includes the following steps:

501. A sending apparatus distributes a received OTUCn signal as n OTLC1 signals, and determines an OTLC1 signal quantity n.

Exemplarily, the sending apparatus distributes the OTUCn signal as the n OTLC1 at a granularity of byte (that is, starting from the first byte of an OTUCn frame, bytes are sequentially distributed to n lanes).

502. The sending apparatus separately performs FEC coding on the n OTLC1 signals.

A type of FEC coding used in step 502 is not limited, and an NS coding scheme is preferred.

503. The sending apparatus acquires n unrelated scrambler generator polynomials $(G_1(x), G_2(x), ......, G_n(x))$ based on the OTLC 1 signal quantity n.

The foregoing n unrelated scrambler generator polynomials are n scrambler generator polynomials that have no common factor. The n scrambler generator polynomials that have no common factor in the present invention means that any two scrambler generator polynomials cannot be exactly divided by each other.

504. The sending apparatus allocates a corresponding scrambler generator polynomial to each OTLC1 signal.

Exemplarily, the sending apparatus allocates the corresponding scrambler generator polynomial to each OTLC1 signal according to a lane number of each OTLC1 signal (for example, an OTLC1 number that is located in an OTUCn ID overhead area of an OTUCn frame) and a polynomial number of each scrambler generator polynomial. For example, a scrambler generator polynomial with a polynomial number 1 is allocated to an OTLC1 signal numbered OTLC1 #1, and a scrambler generator polynomial with a polynomial number 2 is allocated to an OTLC1 signal numbered OTLC1 #2.

505. The sending apparatus separately performs scrambling processing on the OTLC1 signals based on the n unrelated scrambler generator polynomials.

Exemplarily, before scrambling processing is performed on the n OTLC1 signals, the n unrelated scrambler generator polynomials $G_1(x), G_2(x), ......, G_n(x)$ are first acquired based on n, and frame synchronization scrambling processing is separately performed on the n OTLC1 signals by using the n corresponding unrelated scrambler generator polynomials $G_1(x), G_2(x), ......, G_n(x)$, where frame synchronous scrambling processing needs to be performed on all bytes in each of the foregoing OTLC1 signals except frame header bytes (the first to the sixth columns in the first row). A specific frame synchronization scrambling processing process is as follows:

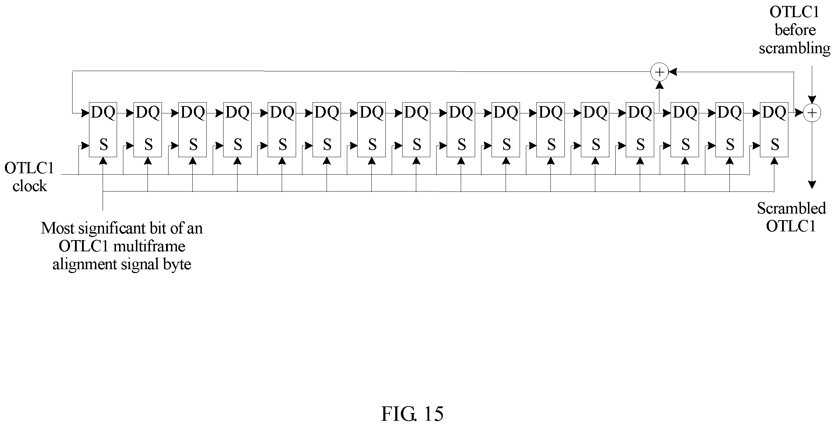

For example, a scrambler generator polynomial that is corresponding to the first OTLC1 and is generated in Manner 1 and Manner 2 of acquiring the n unrelated scrambler generator polynomials in the embodiment in FIG. 12 is $G_1(x) = 1 + x^{13} + x^{16}$, and a corresponding scrambling circuit of the first OTLC1 is shown in FIG. 15. Scrambling processing is performed on the first OTLC1 signal according to the scrambling circuit shown in FIG. 15. During initialization, a reset value is all 1s, that is, "FFFF" in hexadecimal notation. Driven by a clock of the first OTLC1 signal, the first OTLC1 signal, starting from the seventh column in the first row, is input through an "unscrambled OTLC1" signal interface, where each byte is input in a highest priority-first sequence, that is, a high bit is input before a low bit, and for each byte, the seventh bit is first input and the zeroth bit is input at last. After frame synchronization scrambling is performed, a data flow obtained by means of frame synchronization scrambling is output through a "scrambled OTLC1" signal interface, to obtain the first OTLC1 signal obtained by means of frame synchronization scrambling.

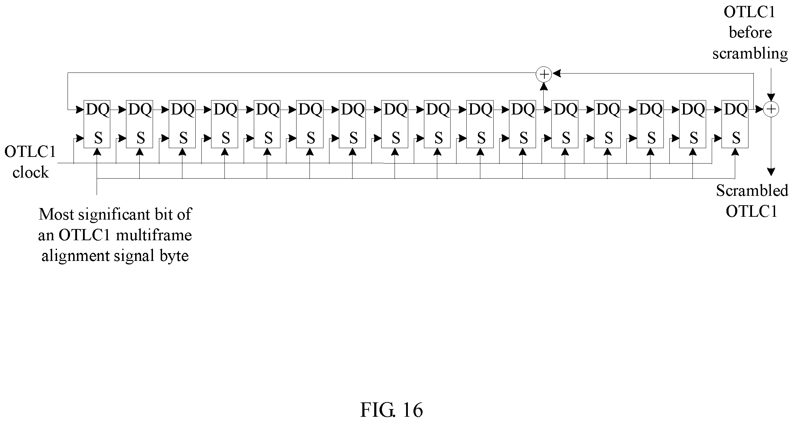

Further, a scrambler generator polynomial corresponding to the second OTLC1 is $G_2(x) = 1 + x^{11} + x^{16}$, and a corresponding scrambling circuit of the second OTLC1 is shown in FIG. 16. Scrambling processing is performed on the second OTLC1 signal according to the scrambling circuit shown in FIG. 16. Scrambling processing processes of the second OTLC1 signal and subsequent OTLC1 signals are similar to a scrambling process corresponding to the first OTLC1, and details are not described herein again. Accordingly, scrambling processes corresponding to other n-2 OTLC1 signals are similar to the foregoing scrambling processes corresponding to the first OTLC1 and the second OTLC1, and details are not described herein again.

506. The sending apparatus splits the n scrambled OTLC1 signals into 4*n OTLC1.4n logical lanes.

Exemplarily, a process in which the sending apparatus splits the n scrambled OTLC1 signals into the 4*n OTLC1.4n logical lanes is as follows:

An example in which one of the n scrambled OTLC1 signals is split into four OTLC1.4n logical lanes is used for description.

Specifically, when a frame structure of an OTL frame shown in FIG. 2 is used as an example, and four OTL frames are used as a period, each OTL frame is divided into 1020 16-byte blocks at a granularity of 16 bytes, where the first 16-byte block includes a frame header indication FALC1 (the sixth byte of the frame header indication is LLM byte overheads, whose value ranges from 0 to 239 and to which 0 to 239 are assigned successively from the first frame to the 240th frame before a next round starts in a next frame), and the 1020 16-byte blocks in each frame are distributed round-robin to four logical lanes on a per-16-byte block basis. When a frame structure of an OTL frame shown in FIG. 4 is used as an example, and four OTL frames are used as a period, each OTL frame is divided into 956 16-byte blocks at a granularity of 16 bytes, where the first 16-byte block includes a frame header indication FALC1, and the 956 16-byte blocks in each frame are distributed round-robin to four logical lanes on a per-16-byte block basis. Exemplarily, distribution is performed starting from the first logical lane in the first frame, distribution is performed starting from the second logical lane in the second frame, distribution is performed starting from the third logical lane in the third frame, and distribution is performed starting from the fourth logical lane in the fourth frame. In this way, it is ensured that each logical lane includes a frame header indication within a period (four OTL frames are used as a period), so that the receive end identifies each logical lane by searching for the frame header indication.

507. The sending apparatus multiplexes the 4*n OTLC1.4n logical lanes into m multiplexed lane signals, and transports the m multiplexed lane signals to a receiving apparatus over m subcarriers.

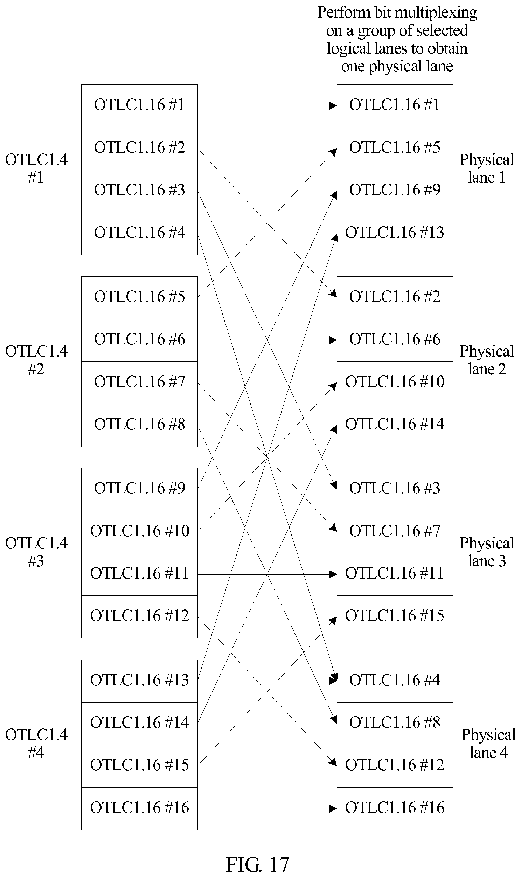

Exemplarily, as shown in FIG. 17, four OTLC1.4 lane signals may be used as an example. The sending apparatus splits each of the four OTLC1.4 lane signals into four OTLC1.16 logical lanes, multiplexes the first logical lanes of the four OTLC1.4 lane signals into one physical lane, multiplexes the second logical lanes of the four OTLC1.4 lane signals into one physical lane, multiplexes the third logical lanes of the four OTLC1.4 lane signals into one physical lane, and multiplexes the fourth logical lanes of the four OTLC1.4 lane signals into one physical lane. The foregoing physical lane is a multiplexed lane signal. During multiplexing, a round-robin bit-interleaved multiplexing manner is used. It should be noted that the foregoing multiplexing manner is merely one possible implementation manner in the present invention, any multiplexing method for multiplexing different logical lanes of 100 G shall fall within the protection scope of the present invention.

According to the method for signal transmission in an optical transport network provided in this embodiment of the present invention, a sending apparatus distributes an OTUCn signal as n OTLC1 lane signals, performs scrambling processing on a corresponding OTLC1 signal according to each of n unrelated scrambler generator polynomials, and finally transports the scrambled OTLC1 signals to a receiving apparatus over subcarriers.

In the prior art, the sending apparatus only performs bit multiplexing on the n OTLC1 signals and then sends the n bit-multiplexed OTLC1 signals to the receiving apparatus, but does not perform scrambling processing on the OTUCn signal or the OTLC1 signals obtained through splitting. Therefore, long 0s or long 1s may occur in line transmission, and further, a receive end cannot restore a correct signal data flow. In the solution provided in the present invention, scrambling processing is performed on the n OTLC1 signals by using the n pre-acquired unrelated scrambler generator polynomials, that is, an original data flow of an OTLC1 signal is re-coded according to a scrambler generator polynomial. In a data flow of a scrambled OTLC1 signal, consecutive 0s or consecutive 1s in the original data flow are avoided. In addition, consecutive 0s or consecutive 1s that occur when logical lanes split from different OTLC1 signals are multiplexed into one multiplexed lane signal can be avoided. Therefore, long 0s or long 1s that occur in a line are avoided, thereby further ensuring that the receive end can correctly restore the data flow.

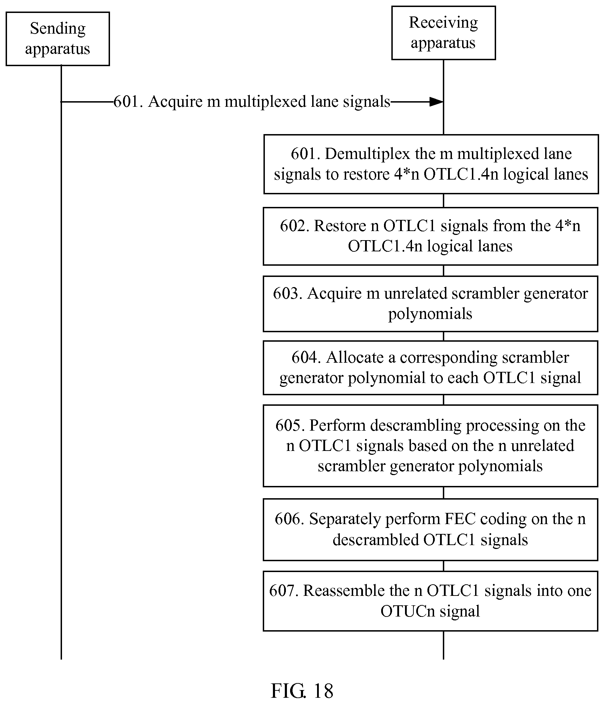

Referring to FIG. 18, based on the process described in steps 501 to 507 in which a transmit end performs scrambling on a signal and transmits the scrambled signal to a receive end, correspondingly, a process in which the receive end performs processing after receiving a scrambled signal includes the following steps:

601. A receiving apparatus acquires m multiplexed lane signals, and demultiplexes the m multiplexed lane signals to restore 4*n OTLC1.4n logical lanes.

Exemplarily, the receiving apparatus distributes the m multiplexed lane signals round-robin to the 4*n OTLC1.4n logical lanes on a per-bit basis, to restore the 4*n OTLC1.4n logical lanes.

602. The receiving apparatus restores n OTLC1 signals from the 4*n OTLC1.4n logical lanes.

Exemplarily, after restoring the 4*n OTLC1.4n logical lanes, the receiving apparatus first separately performs framing processing on the 4*n OTLC1.4n logical lanes, and acquires a frame header indication of each logical lane by searching for an OTLC1 signal frame header pattern (the second to the fifth columns in the first row of an OTLC1 frame) carried in each logical lane. Secondly, the receiving apparatus aligns the 4n OTLC1.4n logical lanes according to the foregoing frame header indication of each logical lane, and learns, according to an OTUCn ID (whose value range is 0 to (n-1), respectively indicating the first to the $n^{th}$ OTLC signals), an OTLC1 signal to which each logical lane belongs, so as to divide the 4*n OTLC1.4n logical lanes into n groups. Finally, the receiving apparatus restores one OTLC1 signal from four OTLC1.4n logical lanes in each group according to LLMs (Logical Lane Marker, logical lane marker) (whose value range is defined as 0-239) corresponding to the four OTLC1.4n logical lanes in each group. Specifically, a process of restoring one OTLC1 signal from four OTLC1.4n logical lanes in any one of the n groups is as follows: The receiving apparatus acquires LLMs (0-239) carried in the four OTLC1.4n logical lanes in this group to learn numbers of the four OTLC1.4n logical lanes, re-arranges the four OTLC1.4n logical lanes in this group according to the numbers to restore a logical lane sequence that exists before sending, and reassembles the re-arranged four OTLC1.4n logical lanes at a granularity of 16-byte block to restore one OTLC1 signal of 100 G. An OTUCn signal is distributed as n OTLC1 signals, where the n OTLC1 signals are numbered OTLC1 #1, OTLC1#2, ..., and OTLC1 #n. OTUCn ID overheads located in the first column and the first row of each OTLC1 signal carry number information of the OTLC1 signal.

603. The receiving apparatus acquires n unrelated scrambler generator polynomials ($G_1(x), G_2(x), ......, G_n(x)$) based on an OTLC 1 signal quantity n.

The foregoing n unrelated scrambler generator polynomials are n scrambler generator polynomials that have no common factor. The n scrambler generator polynomials that have no common factor in the present invention means that any two scrambler generator polynomials cannot be exactly divided by each other.

604. The receiving apparatus allocates a corresponding scrambler generator polynomial to each OTLC1 signal.

Exemplarily, the receiving apparatus allocates the corresponding scrambler generator polynomial to each OTLC1 signal according to a lane number of each OTLC1 signal (for example, an OTLC1 number that is located in an OTUCn ID overhead area of an OTUCn frame), a polynomial number of each scrambler generator polynomial, and a scrambler generator polynomial allocation policy of a sending apparatus. For example, the sending apparatus sets that a scrambler generator polynomial with a polynomial number 1 is allocated to an OTLC1 signal with a lane number OTLC1 #1, and a scrambler generator polynomial with a polynomial number 2 is allocated to an OTLC1 signal with a lane number OTLC1 #2, and then the receiving apparatus acquires the scrambler generator polynomial with the polynomial number 1 for the OTLC1 signal with the lane number OTLC1 #1 and performs descrambling processing on the OTLC1 signal with the lane number OTLC1 #1, and acquires the scrambler generator polynomial with the polynomial number 2 for the OTLC1 signal with the lane number OTLC1 #2 and performs descrambling processing on the OTLC1 signal with the lane number OTLC1 #2.

605. The receiving apparatus separately performs descrambling processing on a corresponding OTLC1 signal based on each of the n unrelated scrambler generator polynomials.

Exemplarily, before descrambling processing is performed on the n OTLC1 signals, the n unrelated scrambler generator polynomials $G_1(x), G_2(x), ......, G_n(x)$ are first acquired based on n, and frame synchronization descrambling processing is separately performed on the n OTLC1 signals by using the n corresponding unrelated scrambler generator polynomials $G_1(x), G_2(x), ......, G_n(x)$, where descrambling processing needs to be performed on all bytes in each of the foregoing OTLC1 signals except frame header bytes (the first to the sixth columns in the first row). A specific descrambling process is similar to a scrambling process, and details are not described herein again.

606. The receiving apparatus separately performs FEC coding on the n descrambled OTLC1 signals.

A type of FEC coding used in step 606 is not limited, and an NS coding scheme is preferred.

607. The receiving apparatus reassembles the n OTLC1 signals into one OTUCn signal.

It should be noted that before the n OTLC1 signals are reassembled, it is required to ensure that frame headers of the n OTLC1 signals are aligned, and then the n OTLC1 signals are reassembled into one OTUCn signal in a byte multiplexing manner.

According to the method for signal transmission in an optical transport network provided in this embodiment of the present invention, a receiving apparatus acquires n OTLC1Cn optical channel transport lane signals, performs descrambling processing on a corresponding OTLC1 signal according to each of n unrelated scrambler generator polynomials, and reassembles the n descrambled OTLC 1 signals into one OTUCn signal.

In the prior art, a sending apparatus only performs bit multiplexing on the n OTLC1 signals and then sends the n bit-multiplexed OTLC1 signals to the receiving apparatus, but does not perform scrambling and descrambling processing on the OTUCn signal or the OTLC1 signals obtained through splitting. Therefore, long 0s or long 1s may occur in line transmission, and further, a receive end cannot restore a correct signal data flow. In the solution provided in the present invention, descrambling processing is performed on the n OTLC1 signals by using the n pre-acquired unrelated scrambler generator polynomials, that is, an original data flow of an OTLC1 signal is re-coded according to a scrambler generator polynomial. In a data flow of a scrambled OTLC1 signal, consecutive 0s or consecutive 1s in the original data flow are avoided. In addition, consecutive 0s or consecutive 1s that occur when logical lanes split from different OTLC1 signals are multiplexed into one multiplexed lane signal can be avoided. Therefore, long 0s or long 1s that occur in a line are avoided, thereby further ensuring that the receive end can correctly restore the data flow.

An embodiment of the present invention provides a sending device, which can be configured to implement the sending apparatuses in the embodiments shown in FIG. 12, FIG. 13, FIG. 14, and FIG. 18. For content such as a working mechanism, interaction with another network element, and related technical terms and concepts of the sending device, refer to the embodiments shown in FIG. 12 to FIG. 18, and details are not described herein again.

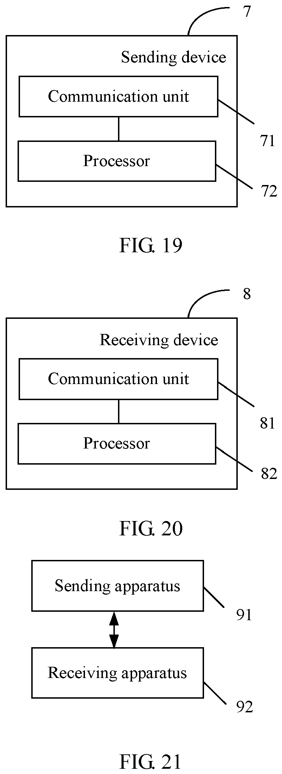

As shown in FIG. 19, the sending device 7 includes a communication unit 71 and a processor 72.

The communication unit 71 is configured to communicate with an external device.

The processor 72 is configured to:

receive an OTUCn optical channel transport unit signal, and distribute the OTUCn signal as n OTL optical channel transport lane signals, where the foregoing OTL signal quantity n is an integer greater than or equal to 2;
separately perform scrambling processing on the n OTL signals based on n unrelated scrambler generator polynomials, where
the n unrelated scrambler generator polynomials are n scrambler generator polynomials that have no common factor; and
transport the scrambled OTL signals to a receiving apparatus over subcarriers.

Optionally, the processor 72 is further configured to acquire the n unrelated scrambler generator polynomials according to the OTL signal quantity n.

Optionally, the processor 72 acquires the n unrelated scrambler generator polynomials according to the OTL signal quantity n and is specifically configured to acquire the n unrelated scrambler generator polynomials from a preconfigured scrambler generator polynomial repository according to the OTL signal quantity n, where at least n unrelated scrambler generator polynomials are stored in the foregoing scrambler generator polynomial repository.

Optionally, the processor 72 acquires the n unrelated scrambler generator polynomials according to the OTL signal quantity n and is specifically configured to: determine a highest degree of the scrambler generator polynomial; determine all prime numbers that are less than the highest degree of the scrambler generator polynomial; and generate the n unrelated scrambler generator polynomials according to the OTL signal quantity n.

Degrees of all terms of each of the foregoing scrambler generator polynomials except a highest-degree term and a constant term are numbers in all the prime numbers, and any two polynomials are different.

Optionally, a scrambler generator polynomial corresponding to an OTL signal whose lane number is r in the foregoing n OTL signals is $G_r(x) = 1 + X + x^b$, where the foregoing parameter X is a term of the scrambler generator polynomial other than a highest-degree monomial and a constant term, and is determined according to the lane number r corresponding to the OTL signal; and the foregoing parameter b is a highest degree of the polynomial and is preconfigured or is delivered to the sending apparatus by using a network manager, and b is a natural number.

Optionally, the processor 72 transports the scrambled OTL signals to the receiving apparatus over the subcarriers and is specifically configured to: split each scrambled OTL signal into c logical lanes, to obtain c*n logical lanes in total, where c is a natural number; multiplex the c*n logical lanes into m multiplexed lane signals; and transport the m multiplexed lane signals to the receiving apparatus over the subcarriers.

Optionally, each of the foregoing m multiplexed lane signals is obtained by multiplexing at least two logical lanes, and the foregoing two logical lanes are not logical lanes split from a same scrambled OTL signal.

Optionally, the processor 72 transports the scrambled OTL signals to the receiving apparatus over the subcarriers and is specifically configured to: multiplex the n scrambled OTL signals into m multiplexed lane signals; and transport the foregoing m multiplexed lane signals to the receiving apparatus over the subcarriers.

Optionally, the processor 72 is further configured to: store a correspondence between the n OTL signals and the n unrelated scrambler generator polynomials; or generate a correspondence between the n OTL signals and the n unrelated scrambler generator polynomials; or obtain a correspondence between the foregoing n OTL signals and the n unrelated scrambler generator polynomials from the network manager.

The foregoing correspondence describes a scrambler generator polynomial used for each OTL signal when each OTL signal is scrambled.

Optionally, the processor 72 separately performs scrambling processing on the n OTL signals based on the n unrelated scrambler generator polynomials and is specifically configured to select a corresponding scrambler generator polynomial for each OTL signal according to the correspondence, so as to perform scrambling processing.

The sending device provided in this embodiment of the present invention distributes an OTUCn signal as n OTL lane signals, performs scrambling processing on a corresponding OTL signal according to each of n unrelated scrambler generator polynomials, and finally transports the scrambled OTL signals to a receiving apparatus over subcarriers.

In the prior art, a sending apparatus only performs bit multiplexing on the n OTL signals and then sends the n bit-multiplexed OTL signals to the receiving apparatus, but does not perform scrambling processing on the OTUCn signal or the OTL signals obtained through splitting. Therefore, long 0s or long 1s may occur in line transmission, and further, a receive end cannot restore a correct signal data flow. In the solution provided in the present invention, scrambling processing is performed on the n OTL signals by using the n pre-acquired unrelated scrambler generator polynomials, that is, an original data flow of an OTL signal is re-coded according to a scrambler generator polynomial. In a data flow of a scrambled OTL signal, consecutive 0s or consecutive 1s in the original data flow are avoided. In addition, consecutive 0s or consecutive 1s that occur when logical lanes split from different OTL signals are multiplexed into one multiplexed lane signal can be avoided. Therefore, long 0s or long 1s that occur in a line are avoided, thereby further ensuring that the receive end can correctly restore the data flow.

An embodiment of the present invention provides a receiving device, which can be configured to implement the receiving apparatuses in the embodiments shown in FIG. 12, FIG. 13, FIG. 14, and FIG. 18. For content such as a working mechanism, interaction with another network element, and related technical terms and concepts of the receiving device, refer to the embodiments shown in FIG. 12 to FIG. 18, and details are not described herein again.

As shown in FIG. 20, the receiving device 8 includes a communication unit 81 and a processor 82.

The communication unit 81 is configured to communicate with an external device.

The processor 82 is configured to:

acquire n OTL optical channel transport lane signals, where
the foregoing n OTL signals are distributed from one OTUCn optical channel transport unit signal, where n is greater than or equal to 2;
separately perform descrambling processing on the n OTL signals based on n unrelated scrambler generator polynomials, where
the foregoing n unrelated scrambler generator polynomials are n scrambler generator polynomials that have no common factor, and the n scrambler generator polynomials that have no common factor in the present invention means that any two scrambler generator polynomials cannot be exactly divided by each other; and
reassemble the n descrambled OTL signals into one OTUCn optical channel transport unit signal.

Optionally, the processor 82 is further configured to acquire the n unrelated scrambler generator polynomials according to an OTL signal quantity n.

Further, optionally, the processor 82 acquires the n unrelated scrambler generator polynomials according to the OTL signal quantity n and is specifically configured to acquire the n unrelated scrambler generator polynomials from a preconfigured scrambler generator polynomial repository according to the OTL signal quantity n, where at least n unrelated scrambler generator polynomials are stored in the scrambler generator polynomial repository.

Further, optionally, the processor 82 acquires the n unrelated scrambler generator polynomials according to the OTL signal quantity n and is specifically configured to: determine a highest degree of the scrambler generator polynomial; determine all prime numbers that are less than the highest degree of the scrambler generator polynomial; and generate the n unrelated scrambler generator polynomials according to the OTL signal quantity n.

Degrees of all terms of each of the foregoing scrambler generator polynomials except a highest-degree term and a constant term are numbers in all the prime numbers, and any two polynomials are different.

Optionally, a scrambler generator polynomial corresponding to an OTL signal whose lane number is r in the foregoing n OTL signals is $G_r(x) = 1 + X + x^b$, where the foregoing parameter X is a term of the scrambler generator polynomial other than a highest-degree monomial and a constant term, and is determined according to the lane number r corresponding to the OTL signal; b is a highest degree of the polynomial that is preconfigured or is delivered to the receiving apparatus by using a network manager, and b is a natural number; and r is a value selected from integers 1 to n.

Optionally, the processor 82 acquires the n OTL optical channel transport lane signals and is specifically configured to: demultiplex m received multiplexed lane signals to restore c*n logical lanes, and restore the n OT signals from the c*n logical lanes; or demultiplex m received multiplexed lane signals to restore the n OTL signals.

Optionally, the processor 82 is further configured to: acquire a lane number of each OTL signal and a polynomial number of each scrambler generator polynomial; and search for, according to the lane number of each OTLOTL signal and the polynomial number of each scrambler generator polynomial, a scrambler generator polynomial corresponding to each OTL signal.

Optionally, the processor 82 is further configured to: store a correspondence between the n OTL signals and the n unrelated scrambler generator polynomials; or generate a correspondence between the n OTL signals and the n unrelated scrambler generator polynomials; or obtain a correspondence between the n OTL signals and the n unrelated scrambler generator polynomials from the network manager.

The foregoing correspondence describes a scrambler generator polynomial used for each OTL signal when each OTL signal is scrambled.

The receiving device provided in this embodiment of the present invention acquires n OTLCn optical channel transport lane signals, performs descrambling processing on a corresponding OTL signal according to each of n unrelated scrambler generator polynomials, and reassembles the n descrambled OTL signals into one OTUCn signal.

In the prior art, a sending device only performs bit multiplexing on the n OTL signals and then sends the n bit-multiplexed OTL signals to the receiving device, but does not perform scrambling and descrambling processing on the OTUCn signal or the OTL signals obtained through splitting. Therefore, long 0s or long 1s may occur in line transmission, and further, a receive end cannot restore a correct signal data flow. In the solution provided in the present invention, descrambling processing is performed on the n OTL signals by using the n pre-acquired unrelated scrambler generator polynomials, that is, an original data flow of an OTL signal is re-coded according to a scrambler generator polynomial. In a data flow of a scrambled OTL signal, consecutive 0s or consecutive 1s in the original data flow are avoided. In addition, consecutive 0s or consecutive 1s that occur when logical lanes split from different OTL signals are multiplexed into one multiplexed lane signal can be avoided. Therefore, long 0s or long 1s that occur in a line are avoided, thereby further ensuring that the receive end can correctly restore the data flow.

The sending apparatus and the receiving apparatus provided in the embodiments of the present invention may further constitute a system for signal transmission in an optical transport network, so as to implement the methods for signal transmission in an optical transport network according to the embodiments shown in FIG. 12 to FIG. 18. Exemplarily, as shown in FIG. 21, the system 9 for signal transmission in an optical transport network includes: a sending apparatus 91 and a receiving apparatus 92. The sending apparatus 91 may be the sending apparatuses shown in FIG. 5 to FIG. 8, and the receiving apparatus 92 may be the receiving apparatuses shown in FIG. 9 to FIG. 11.

According to the system for signal transmission in an optical transport network provided in this embodiment of the present invention, a same scrambler generator polynomial generation policy is set at a transmit end and a receive end, so that the transmit end and the receive end can generate a corresponding scrambler generator polynomial for each OTL signal according to the scrambler generator polynomial generation policy, and scrambling or descrambling processing can be performed on the OTL signal according to the corresponding scrambler generator polynomial.

In the prior art, the transmit end only performs bit multiplexing on n OTL signals and then sends the n bit-multiplexed OTL signals to the receive end, but does not perform scrambling processing on an OTUCn signal or OTL signals obtained through splitting. Therefore, when bit multiplexing is performed on multiple OTL signals, long 0s or long 1s in an original data flow of an OTL signal are extended, and further, the receive end cannot restore a correct signal data flow. The present invention is different. In the present invention, scrambling processing is performed on the n OTL signals by using n pre-acquired unrelated scrambler generator polynomials, that is, an original data flow of an OTL signal is re-coded by using a scrambler generator polynomial. In a data flow of a scrambled OTL signal, consecutive 0s or consecutive 1s in the original data flow are avoided. In addition, because the n scrambler generator polynomials are unrelated to each other, even if logical lanes split from different OTL signals are multiplexed into one physical lane, long 0s or long 1s do not occur in a data flow transmitted over the physical lane, thereby further ensuring that the receive end can correctly restore the OTUCn signal.

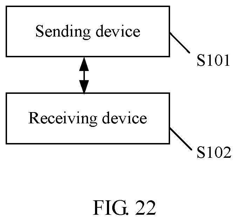

The sending device and the receiving device provided in the embodiments of the present invention may further constitute a system for signal transmission in an optical transport network, so as to implement the methods for signal transmission in an optical transport network according to the embodiments shown in FIG. 12 to FIG. 18. Exemplarily, as shown in FIG. 22, the system S10 for signal transmission in an optical transport network includes: a sending device S101 and a receiving device S102. The sending device S101 may be the sending device shown in FIG. 19, and the receiving device S102 may be the receiving device shown in FIG. 20.

According to the system for signal transmission in an optical transport network provided in this embodiment of the present invention, a same scrambler generator polynomial generation policy is set at a transmit end and a receive end, so that the transmit end and the receive end can generate a corresponding scrambler generator polynomial for each OTL signal according to the scrambler generator polynomial generation policy, and scrambling or descrambling processing can be performed on the OTL signal according to the corresponding scrambler generator polynomial.

In the prior art, the transmit end only performs bit multiplexing on n OTL signals and then sends the n bit-multiplexed OTL signals to the receive end, but does not perform scrambling processing on an OTUCn signal or OTL signals obtained through splitting. Therefore, when bit multiplexing is performed on multiple OTL signals, long 0s or long 1s in an original data flow of an OTL signal are extended, and further, the receive end cannot restore a correct signal data flow. The present invention is different. In the present invention, scrambling processing is performed on the n OTL signals by using n pre-acquired unrelated scrambler generator polynomials, that is, an original data flow of an OTL signal is re-coded by using a scrambler generator polynomial. In a data flow of a scrambled OTL signal, consecutive 0s or consecutive 1s in the original data flow are avoided. In addition, because the n scrambler generator polynomials are unrelated to each other, even if logical lanes split from different OTL signals are multiplexed into one physical lane, long 0s or long 1s do not occur in a data flow transmitted over the physical lane, thereby further ensuring that the receive end can correctly restore the OTUCn signal.

It may be clearly understood by a person skilled in the art that, for the purpose of convenient and brief description, division of the foregoing function modules is taken as an example for illustration. In actual application, the foregoing functions can be allocated to different function modules and implemented according to a requirement, that is, an inner structure of an apparatus is divided into different function modules to implement all or some of the functions described above. For a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely exemplary. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present application essentially, or the part contributing to the prior art, or all or a part of the technical solutions may be implemented in the form of a software product. The software product is stored in a storage medium and includes several instructions for instructing a computer device (which may be a personal computer, a server, or a network device) or a processor (processor) to perform all or a part of the steps of the methods described in the embodiments of the present application. The foregoing storage medium includes: any medium that can store program code, such as a USB flash drive, a portable hard disk, a read-only memory (ROM, Read-Only Memory), a random access memory (RAM, Random Access Memory), a magnetic disk, or an optical disc.

The foregoing embodiments are merely intended for describing the technical solutions of the present application, but not for limiting the present application. Although the present application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of the present application.

**Claims**

1. A sending apparatus, comprising:

   a distribution unit, configured to: receive an OTUCn optical channel transport unit signal, and distribute the OTUCn signal as n OTL optical channel transport lane signals, wherein n is an integer greater than or equal to 2;
   a scrambling unit, configured to separately perform scrambling processing on the n OTL signals based on n unrelated scrambler generator polynomials, wherein the n unrelated scrambler generator polynomials are n scrambler generator polynomials that have no common factor; and
   a transport unit, configured to transport the OTL signals scrambled by the scrambling unit to a receiving apparatus over subcarriers.

2. The sending apparatus according to claim 1, wherein the sending apparatus further comprises:

   an acquiring unit, configured to acquire the n unrelated scrambler generator polynomials according to an OTL signal quantity n.

3. The sending apparatus according to claim 2, wherein:

   the acquiring unit is specifically configured to acquire the n unrelated scrambler generator polynomials from a preconfigured scrambler generator polynomial repository according to the OTL signal quantity n, wherein at least n scrambler generator polynomials are stored in the scrambler generator polynomial repository.

4. The sending apparatus according to claim 2, wherein:

   the acquiring unit is specifically configured to: determine a highest degree of the scrambler generator polynomial; determine all prime numbers that are less than the highest degree of the scrambler generator polynomial; and generate the n unrelated scrambler generator polynomials according to the OTL signal quantity n, wherein degrees of all terms of each scrambler generator polynomial except a highest-degree term and a constant term are numbers in all the prime numbers, and any two polynomials are different.

5. The sending apparatus according to any one of claims 1 to 4, wherein the transport unit comprises:

   a splitting module, configured to split each scrambled OTL signal obtained by the scrambling unit into c logical lanes, to obtain c*n logical lanes in total, wherein c is a natural number;
   a first multiplexing module, configured to multiplex the c*n logical lanes obtained by means of splitting by the splitting module into m multiplexed lane signals; and
   a first transport module, configured to transport the m multiplexed lane signals obtained by means of multiplexing by the multiplexing module to the receiving apparatus over subcarriers.

6. A receiving apparatus, comprising:

   a first acquiring unit, configured to acquire n OTL optical channel transport lane signals, wherein the n OTL signals are distributed from one OTUCn optical channel transport unit signal, and n is greater than or equal to 2;

a descrambling unit, configured to separately perform descrambling processing on the n OTL signals based on n unrelated scrambler generator polynomials, wherein the n unrelated scrambler generator polynomials are n scrambler generator polynomials that have no common factor; and

a reassembling unit, configured to reassemble the n OTL signals descrambled by the descrambling unit into the one OTUCn signal.

7. The receiving apparatus according to claim 6, wherein the receiving apparatus further comprises:

a second acquiring unit, configured to acquire the n unrelated scrambler generator polynomials according to an OTL signal quantity n.

8. The receiving apparatus according to claim 7, wherein:

the second acquiring unit is specifically configured to acquire the n unrelated scrambler generator polynomials from a preconfigured scrambler generator polynomial repository according to the OTL signal quantity n, wherein at least n unrelated scrambler generator polynomials are stored in the scrambler generator polynomial repository.

9. The receiving apparatus according to claim 7, wherein:

the second acquiring unit is specifically configured to: determine a highest degree of the scrambler generator polynomial; determine all prime numbers that are less than the highest degree of the scrambler generator polynomial; and generate the n unrelated scrambler generator polynomials according to the OTL signal quantity n, wherein degrees of all terms of each scrambler generator polynomial except a highest-degree term and a constant term are numbers in all the prime numbers, and any two polynomials are different.

10. A method for signal transmission in an optical transport network, comprising:

receiving an OTUCn optical channel transport unit signal, and distributing the OTUCn signal as n OTL optical channel transport lane signals, wherein n is an integer greater than or equal to 2; separately performing scrambling processing on the n OTL signals based on n unrelated scrambler generator polynomials, wherein the n unrelated scrambler generator polynomials are n scrambler generator polynomials that have no common factor; and

transporting the scrambled OTL signals to a receiving apparatus over subcarriers.

11. The method according to claim 10, wherein after the receiving an OTUCn optical channel transport unit signal, and distributing the OTUCn signal as n OTL optical channel transport lane signals, the method further comprises:

acquiring the n unrelated scrambler generator polynomials according to an OTL signal quantity n.

12. The method according to claim 11, wherein the acquiring the n unrelated scrambler generator polynomials according to an OTL signal quantity n specifically comprises:

acquiring the n unrelated scrambler generator polynomials from a preconfigured scrambler generator polynomial repository according to the OTL signal quantity n, wherein at least n unrelated scrambler generator polynomials are stored in the scrambler generator polynomial repository.

13. A method for signal transmission in an optical transport network, comprising:

acquiring n OTL optical channel transport lane signals, wherein the n OTL signals are distributed from one OTUCn optical channel transport unit signal, and n is greater than or equal to 2; separately performing descrambling processing on the n OTL signals based on n unrelated scrambler generator polynomials, wherein the n unrelated scrambler generator polynomials are n scrambler generator polynomials that have no common factor; and reassembling the n descrambled OTL signals into one OTUCn optical channel transport unit signal.

14. The method according to claim 13, wherein after the acquiring OTL optical channel transport lane signals, the method further comprises:

acquiring the n unrelated scrambler generator polynomials according to an OTL signal quantity n.

15. The method according to claim 14, wherein the acquiring the n unrelated scrambler generator polynomials according to an OTL signal quantity n specifically comprises:

determining a highest degree of the scrambler generator polynomial;

determining all prime numbers that are less than the highest degree of the scrambler generator polynomial; and

generating the n unrelated scrambler generator polynomials according to the OTL signal quantity n, wherein

degrees of all terms of each scrambler generator polynomial except a highest-degree term and a constant term are numbers in all the prime numbers, and any two polynomials are different.

**Patentansprüche**

1. Sendevorrichtung, umfassend:

eine Verteilungseinheit eingerichtet zum Empfangen eines OTUCn, -Signals bzw. optischen Kanaltransporteinheitssignals und Verteilen des OTUCn-Signals als n OTL -Signals bzw. Kanaltransportspursignale, wobei n eine Ganzzahl größer gleich 2 ist;

eine Verwürfelungseinheit eingerichtet zum getrennten Durchführen von Verwürfelungsverarbeitung an den n OTL-Signalen basierend auf n unbezogenen Verwürflergeneratorpolynomen, wobei die n unbezogenen Verwürflergeneratorpolynome n Verwürflergeneratorpolynome sind, die keinen gemeinsamen Faktor aufweisen; und

eine Transporteinheit eingerichtet zum Transportieren der durch die Verwürfelungseinheit verwürfelten OTL-Signale zu einer Empfangsvorrichtung über Unterträger.

2. Sendevorrichtung nach Anspruch 1, wobei die Sendevorrichtung weiterhin umfasst:

eine Erfassungseinheit eingerichtet zum Erfassen der n unbezogenen Verwürflergeneratorpolynome gemäß einer OTL-Signalmenge n.

3. Sendevorrichtung nach Anspruch 2, wobei:

die Erfassungseinheit besonders eingerichtet ist zum Erfassen der n unbezogenen Verwürflergeneratorpolynome aus einer vorkonfigurierten Verwürflergeneratorpolynomenablage gemäß der OTL-Signalmenge n, wobei wenigstens n Verwürflergeneratorpolynome in der Verwürflergeneratorpolynomenablage gespeichert sind.

4. Sendevorrichtung nach Anspruch 2, wobei:

die Erfassungseinheit besonders eingerichtet ist zum Bestimmen eines höchsten Grades des Verwürflergeneratorpolynoms; Bestimmen aller Primzahlen, die weniger als der höchste Grad des Verwürflergeneratorpolynoms sind; und Erzeugen der n unbezogenen Verwürflergeneratorpolynome gemäß der OTL-Signalmenge n, wobei Grade aller Glieder jedes Verwürflergeneratorpolynoms außer einem Glied höchsten Grades und einem konstanten Glied Zahlen in allen Primzahlen sind und beliebige zwei Polynome unterschiedlich sind.

5. Sendevorrichtung nach einem beliebigen der Ansprüche 1 bis 4, wobei die Transporteinheit umfasst:

ein Spaltungsmodul eingerichtet zum Spalten jedes durch die Verwürfelungseinheit erhaltenen verwürfelten OTL-Signals in c logische Spuren zum Erhalten von c*n logischen Spuren insgesamt, wobei c eine natürliche Zahl ist;

ein erstes Multiplexmodul eingerichtet zum Multiplexen der mittels Spalten durch das Spaltungsmodul erhaltenen c*n logischen Spuren in m gemultiplexte Spursignale; und

ein erstes Transportmodul eingerichtet zum Transportieren der m mittels Multiplexen durch das Multiplexmodul erhaltenen gemultiplexten Spursignale Erhalten zu der Empfangsvorrichtung über Unterträger.

6. Empfangsvorrichtung, umfassend:

eine erste Erfassungseinheit eingerichtet zum Erfassen von n OTL-Signalen bzw,-optischen Kanaltransportspursignalen, wobei die n OTL-Signale aus einem OTUCn optischen Kanaltransporteinheitssignal verteilt werden und n größer gleich 2 ist;

eine Entwürfelungseinheit eingerichtet zum getrennten Durchführen von Entwürfelungsverarbeitung an den n OTL-Signalen basierend auf n unbezogenen Verwürflergeneratorpolynomen, wobei die n unbezogenen Verwürflergeneratorpolynome n Verwürflergeneratorpolynome sind, die keinen gemeinsamen Faktor aufweisen; und

eine Wiedervereinigungseinheit eingerichtet zum Wiedervereinigen der durch die Entwürfelungseinheit entwürfelten n OT-Signale in das eine OTUCn-Signal.

7. Empfangsvorrichtung nach Anspruch 6, wobei die Empfangsvorrichtung weiterhin umfasst:

eine zweite Erfassungseinheit eingerichtet zum Erfassen der n unbezogenen Verwürflergeneratorpolynome gemäß einer OTL-Signalmenge n.

8. Empfangsvorrichtung nach Anspruch 7, wobei:

die zweite Erfassungseinheit besonders eingerichtet ist zum Erfassen der n unbezogenen Verwürflergeneratorpolynome aus einer vorkonfigurierten Verwürflergeneratorpolynomenablage gemäß der OTL-Signalmenge n, wobei wenigstens n unbezogene Verwürflergeneratorpolynome in der Verwürflergeneratorpolynomenablage gespeichert sind.

9. Empfangsvorrichtung nach Anspruch 7, wobei:

   die zweite Erfassungseinheit besonders eingerichtet ist zum: Bestimmen eines höchsten Grades des Verwürflergeneratorpolynoms, Bestimmen aller Primzahlen, die weniger als der höchste Grad des Verwürflergeneratorpolynoms sind und Erzeugen der n unbezogenen Verwürflergeneratorpolynome gemäß der OTL-Signalmenge n, wobei Grade aller Glieder jedes Verwürflergeneratorpolynoms außer einem Glied höchstens Grades und einem konstanten Glied Zahlen in allen Primzahlen sind und beliebige zwei Polynome unterschiedlich sind.

10. Verfahren zur Signalübertragung in einem optischen Transportnetz, umfassend:

   Empfangen eines OTUCn-Signals bzw. optischen Kanaltransporteinheitssignals und Verteilen des OTUCn-Signals als n OTL-Signale bzw. optische Kanaltransportspursignale, wobei n eine Ganzzahl größer gleich 2 ist; getrenntes Durchführen von Verwürfelungsverarbeitung an den n OTL-Signalen basierend auf n unbezogenen Verwürflergeneratorpolynomen, wobei die n unbezogenen Verwürflergeneratorpolynome n Verwürflergeneratorpolynome sind, die keinen gemeinsamen Faktor aufweisen; und Transportieren der verwürfelten OTL-Signale zu einer Empfangsvorrichtung über Unterträger.

11. Verfahren nach Anspruch 10, wobei nach dem Empfangen eines OTUCn-Signals bzw. -optischen Kanaltransporteinheitssignals und Verteilen des OTUCn-Signals als n OTL optische Kanaltransportspursignale das Verfahren weiterhin umfasst:

   Erfassen der n unbezogenen Verwürflergeneratorpolynome gemäß einer OTL-Signalmenge n.

12. Verfahren nach Anspruch 11, wobei das Erfassen der n unbezogenen Verwürfelgeneratorpolynome gemäß einer OTL-Signalmenge n besonders umfasst:

   Erfassen der n unbezogenen Verwürflergeneratorpolynome aus einer vorkonfigurierten Verwürflergeneratorpolynomenablage gemäß der OTL-Signalmenge n, wobei wenigstens n unbezogene Verwürflergeneratorpolynome in der Verwürflergeneratorpolynomenablage gespeichert sind.

13. Verfahren zur Signalübertragung in einem optischen Transportnetz, umfassend:

   Erfassen von n OTL-Signalen bzw. optischen Kanaltransportspursignalen, wobei die n OTL-Signale aus einem OTUCn optischen Kanaltransporteinheitssignal verteilt sind, und n größer gleich 2; ist getrenntes Durchführen von Verwürfelungsverarbeitung an den n OTL-Signalen basierend auf n unbezogenen Verwürflergeneratorpolynomen, wobei die n unbezogenen Verwürflergeneratorpolynome n Verwürflergeneratorpolynome sind, die keinen gemeinsamen Faktor aufweisen; und Wiedervereinigen der n entwürfelten OTL-Signale in ein OTUCn optisches Kanaltransporteinheitssignal.

14. Verfahren nach Anspruch 13, wobei nach dem Erfassen von OTL-signalen bzw. optischen Kanaltransportspursignalen das Verfahren weiterhin umfasst:

   Erfassen der n unbezogenen Verwürflergeneratorpolynome gemäß einer OTL-Signalmengen.

15. Verfahren nach Anspruch 14, wobei das Erfassen der n unbezogenen Verwürflergeneratorpolynome gemäß einer OTL-Signalmenge n besonders umfasst:

   Bestimmen eines höchsten Grades des Verwürflergeneratorpolynoms; Bestimmen aller Primzahlen, die weniger als der höchste Grad des Verwürflergeneratorpolynoms sind; und Erzeugen der n unbezogenen Verwürflergeneratorpolynome gemäß der OTL-Signalmenge n, wobei Grade aller Glieder jedes Verwürflergeneratorpolynoms außer einem Glied höchsten Grades und einem konstanten Glied Zahlen in allen Primzahlen sind und beliebige zwei Polynome unterschiedlich sind.

## Revendications

1. Appareil d'émission, comprenant :

une unité de distribution, configurée pour : recevoir un signal d'unité de transport de canal optique OTUCn, et distribuer le signal OTUCn en tant que n signaux de voie de transport de canal optique OTL, dans lequel n est un nombre entier supérieur ou égal à 2 ;
une unité de brouillage, configurée pour exécuter séparément un traitement de brouillage sur les n signaux OTL sur la base de n polynômes générateurs de brouillage sans lien, dans lequel les n polynômes générateurs de brouillage sans lien sont n polynômes générateurs de brouillage qui n'ont pas de facteur commun ; et
une unité de transport, configurée pour transporter les signaux OTL brouillés par l'unité de brouillage vers un appareil de réception sur des sous-porteuses.

2. Appareil d'émission selon la revendication 1, dans lequel l'appareil d'émission comprend en outre :

une unité d'acquisition, configurée pour acquérir les n polynômes générateurs de brouillage sans lien selon une quantité de signaux OTL n.

3. Appareil d'émission selon la revendication 2, dans lequel :

l'unité d'acquisition est spécifiquement configurée pour acquérir les n polynômes générateurs de brouillage sans lien à partir d'un référentiel de polynômes générateurs de brouillage préconfiguré selon la quantité de signaux OTL n, dans lequel au moins n polynômes générateurs de brouillage sont stockés dans le référentiel de polynômes générateurs de brouillage.

4. Appareil d'émission selon la revendication 2, dans lequel :

l'unité d'acquisition est spécifiquement configurée pour : déterminer un degré le plus élevé du polynôme générateur de brouillage ; déterminer tous les nombres premiers qui sont inférieurs au plus haut degré du polynôme générateur de brouillage ; et
générer les n polynômes générateurs de brouillage sans lien en fonction de la quantité de signaux OTL n, dans lequel des degrés de tous les termes de chaque polynôme générateur de brouillage à l'exception d'un terme du plus haut degré et d'un terme constant sont des nombres dans tous les nombres premiers, et n'importe quelle paire de polynômes est constituée de polynômes différents.

5. Appareil d'émission selon l'une quelconque des revendications 1 à 4, dans lequel l'unité de transport comprend :

un module de division, configuré pour diviser chaque signal OTL brouillé obtenu par l'unité de brouillage en c voies logiques, pour obtenir c*n voies logiques au total, où c est un nombre naturel ;
un premier module de multiplexage, configuré pour multiplexer les c*n voies logiques obtenues au moyen de la division par le module de division en m signaux de voies multiplexées ; et
un premier module de transport, configuré pour transporter les m signaux de voies multiplexées obtenus au moyen du multiplexage par le module de multiplexage vers l'appareil de réception sur des sous-porteuses.

6. Appareil de réception, comprenant :

une première unité d'acquisition, configurée pour acquérir n signaux de voie de transport de canal optique OTL, dans lequel les n signaux OTL sont distribués à partir d'un signal d'unité de transport de canal optique OTUCn, et n est supérieur ou égal à 2 ;
une unité de désembrouillage, configurée pour exécuter séparément un traitement de désembrouillage sur les n signaux OTL sur la base de n polynômes générateurs de brouillage sans lien, dans lequel les n polynômes générateurs de brouillage sans lien sont n polynômes générateurs de brouillage qui n'ont pas de facteur commun ; et
une unité de réassemblage, configurée pour réassembler les n signaux OTL désembrouillés par l'unité de désembrouillage en l'un signal OTUCn.

7. Appareil de réception selon la revendication 6, dans lequel l'appareil de réception comprend en outre :

une seconde unité d'acquisition, configurée pour acquérir les n polynômes générateurs de brouillage sans lien selon une quantité de signaux OTL n.

8. Appareil de réception selon la revendication 7, dans lequel :

la seconde unité d'acquisition est spécifiquement configurée pour acquérir les n polynômes générateurs de brouillage sans lien à partir d'un référentiel de polynômes générateurs de brouillage préconfiguré selon la quantité de signaux OTL n, dans lequel au moins n polynômes générateurs de brouillage sans lien sont stockés dans le référentiel de polynômes générateurs de brouillage.

**9.** Appareil de réception selon la revendication 7, dans lequel :

la seconde unité d'acquisition est spécifiquement configurée pour : déterminer un degré le plus élevé du polynôme générateur de brouillage ; déterminer tous les nombres premiers qui sont inférieurs au plus haut degré du polynôme générateur de brouillage ; et générer les n polynômes générateurs de brouillage sans lien en fonction de la quantité de signaux OTL n, dans lequel des degrés de tous les termes de chaque polynôme générateur de brouillage à l'exception d'un terme du plus haut degré et d'un terme constant sont des nombres dans tous les nombres premiers, et n'importe quelle paire de polynômes est constituée de polynômes différents.

**10.** Procédé de transmission de signaux dans un réseau de transport optique, comprenant de :

recevoir un signal d'unité de transport de canal optique OTUCn, et distribuer le signal OTUCn en tant que n signaux de voie de transport de canal optique OTL, dans lequel n est un nombre entier supérieur ou égal à 2 ;
exécuter séparément un traitement de brouillage sur les n signaux OTL sur la base de n polynômes générateurs de brouillage sans lien, dans lequel les n polynômes générateurs de brouillage sans lien sont n polynômes générateurs de brouillage qui n'ont pas de facteur commun ; et
transporter les signaux OTL brouillés vers un appareil de réception sur des sous-porteuses.

**11.** Procédé selon la revendication 10, dans lequel, après la réception d'un signal d'unité de transport de canal optique OTUCn, et la distribution du signal OTUCn en tant que n signaux de voie de transport de canal optique OTL, le procédé comprend en outre de :

acquérir les n polynômes générateurs de brouillage sans lien selon une quantité de signaux OTL n.

**12.** Procédé selon la revendication 11, dans lequel l'acquisition des n polynômes générateurs de brouillage sans lien selon une quantité de signaux OTL n comprend spécifiquement de :

acquérir les n polynômes générateurs de brouillage sans lien à partir d'un référentiel de polynômes générateurs de brouillage préconfiguré selon la quantité de signaux OTL n, dans lequel au moins n polynômes générateurs de brouillage sans lien sont stockés dans le référentiel de polynômes générateurs de brouillage.

**13.** Procédé de transmission de signaux dans un réseau de transport optique, comprenant de :

acquérir n signaux de voie de transport de canal optique OTL, dans lequel les n signaux OTL sont distribués à partir d'un signal d'unité de transport de canal optique OTUCn, et n est supérieur ou égal à 2 ;
exécuter séparément un traitement de désembrouillage sur les n signaux OTL sur la base de n polynômes générateurs de brouillage sans lien, dans lequel les n polynômes générateurs de brouillage sans lien sont n polynômes générateurs de brouillage qui n'ont pas de facteur commun ; et
réassembler les n signaux OTL désembrouillés en un signal d'unité de transport de canal optique OTUCn.

**14.** Procédé selon la revendication 13, dans lequel, après l'acquisition de signaux de voie de transport de canal optique OTL, le procédé comprend en outre de :

acquérir les n polynômes générateurs de brouillage sans lien selon une quantité de signaux OTL n.

**15.** Procédé selon la revendication 14, dans lequel l'acquisition des n polynômes générateurs de brouillage sans lien selon une quantité de signaux OTL n comprend spécifiquement de :

déterminer un degré le plus élevé du polynôme générateur de brouillage ;
déterminer tous les nombres premiers qui sont inférieurs au plus haut degré du polynôme générateur de brouillage ; et
générer les n polynômes générateurs de brouillage sans lien en fonction de la quantité de signaux OTL n, dans lequel
des degrés de tous les termes de chaque polynôme générateur de brouillage à l'exception d'un terme du plus haut degré et d'un terme constant sont des nombres dans tous les nombres premiers, et n'importe quelle paire de polynômes est constituée de polynômes différents.

| | 1 | 7n+1 | 14n | 14n+1 | 16n | 16n+1 | | 3824n | 3824n+1 | 4080n |
|---|---|---|---|---|---|---|---|---|---|---|

| | | |
|---|---|---|
| 1 | Frame header indication overhead area | OTUCn overhead area |
| 2 | ODUCn overhead area | |
| 3 | | |
| 4 | | |

OPUCn overhead area

OPUCn overhead area

OPUCn FEC check area

**FIG. 1**

| | 1 | 7n+1 | 14n | 14n+1 | 16n | 16n+1 | 3824n |
|---|---|---|---|---|---|---|---|

| | | |
|---|---|---|
| 1 | Frame header indication overhead area | OTUCn overhead area |
| 2 | ODUCn overhead area | |
| 3 | | |
| 4 | | |

OPUCn overhead area

OPUCn overhead area

**FIG. 2**

| 7 | 7 | 2 | 3808 | 256 |
|---|---|---|---|---|

| | | |
|---|---|---|
| 1 | OTU#n frame header indication overhead area | OTU#n overhead area |
| 2 | ODU#n overhead area | |
| 3 | | |
| 4 | | |

OPU#n overhead area

OPU#n overhead area

OPU#n FEC check area

**FIG. 3**

| 7 | 7 | 2 | 3808 |
|---|---|---|---|

| | OTU#n frame header indication overhead area | OTU#n overhead area | OPU#n overhead area | OPU#n overhead area |
|---|---|---|---|---|
| 1 | | | | |
| 2 | ODU#n overhead area | | | |
| 3 | | | | |
| 4 | | | | |

FIG. 4

1

Sending apparatus

Distribution unit — 11

Scrambling unit — 12

Transport unit — 13

FIG. 5

FIG. 6

FIG. 7

FIG. 8

2

Receiving apparatus

First acquiring unit — 21

Descrambling unit — 22

Reassembling unit — 23

FIG. 9

2

Receiving apparatus

First acquiring unit — 21

Second acquiring unit — 24

Descrambling unit — 22

Reassembling unit — 23

FIG. 10

FIG. 11

| A sending apparatus receives an OTUCn optical channel transport unit signal | 301 |

↓

| The sending apparatus distributes the OTUCn signal as n OTLCn optical channel transport lane signals | 302 |

↓

| The sending apparatus separately performs scrambling processing on corresponding OTL signals based on n unrelated scrambler generator polynomials | 303 |

↓

| The sending apparatus transports the scrambled OTL signals to a receiving apparatus over subcarriers | 304 |

FIG. 12

| A receiving apparatus acquires n OTL optical channel transport lane signals | 401 |

↓

| The receiving apparatus separately performs descrambling processing on the n OTL signals based on n unrelated scrambler generator polynomials | 402 |

↓

| The receiving apparatus reassembles the n descrambled OTL signals into one OTUCn signal | 403 |

FIG. 13

```
┌─────────────┐                                              ┌─────────────┐
│  Sending    │                                              │ Receiving   │
│ apparatus   │                                              │ apparatus   │
└──────┬──────┘                                              └──────┬──────┘
┌──────┴───────────────────────────────────────────┐               │
│ 501. Distribute an OTUCn signal as n OTLC1 signals│               │
└──────┬───────────────────────────────────────────┘               │
┌──────┴───────────────────────────────────────────┐               │
│ 502. Perform FEC coding on the n OTLC1 signals    │               │
└──────┬───────────────────────────────────────────┘               │
┌──────┴───────────────────────────────────────────┐               │
│ 503. Acquire n unrelated scrambler generator      │               │
│      polynomials                                  │               │
└──────┬───────────────────────────────────────────┘               │
┌──────┴───────────────────────────────────────────┐               │
│ 504. Allocate a corresponding scrambler generator │               │
│      polynomial to each OTLC1 signal              │               │
└──────┬───────────────────────────────────────────┘               │
┌──────┴───────────────────────────────────────────┐               │
│ 505. Perform scrambling processing on the OTLC1   │               │
│ signals based on the n unrelated scrambler        │               │
│ generator polynomials                             │               │
└──────┬───────────────────────────────────────────┘               │
┌──────┴───────────────────────────────────────────┐               │
│ 506. Split the n scrambled OTLC1 signals into 4n  │               │
│      OTLC1.4n logical lanes                       │               │
└──────┬───────────────────────────────────────────┘               │
┌──────┴───────────────────────────────────────────┐               │
│ 507. Multiplex the 4n OTLC1.4n logical lanes into │               │
│      m multiplexed lane signals                   │               │
└──────┬───────────────────────────────────────────┘               │
       │    507. Transport the m multiplexed lane signals to a ───▶ │
       │              receiving apparatus                           │
       │                                                            │
```

FIG. 14

OTLC1
before
scrambling

OTLC1
clock

Most significant bit of an
OTLC1 multiframe
alignment signal byte

Scrambled
OTLC1

FIG. 15

FIG. 16

FIG. 17

```
┌─────────────┐                                    ┌─────────────┐
│  Sending    │                                    │  Receiving  │
│  apparatus  │                                    │  apparatus  │
└─────────────┘                                    └─────────────┘
       │                                                  │
       │──────601. Acquire m multiplexed lane signals────▶│
       │                                                  │
       │                          ┌───────────────────────────────────────┐
       │                          │ 601. Demultiplex the m multiplexed lane│
       │                          │ signals to restore 4*n OTLC1.4n logical│
       │                          │ lanes                                  │
       │                          └───────────────────────────────────────┘
       │                          ┌───────────────────────────────────────┐
       │                          │ 602. Restore n OTLC1 signals from the  │
       │                          │ 4*n OTLC1.4n logical lanes             │
       │                          └───────────────────────────────────────┘
       │                          ┌───────────────────────────────────────┐
       │                          │ 603. Acquire m unrelated scrambler     │
       │                          │ generator polynomials                  │
       │                          └───────────────────────────────────────┘
       │                          ┌───────────────────────────────────────┐
       │                          │ 604. Allocate a corresponding scrambler│
       │                          │ generator polynomial to each OTLC1     │
       │                          │ signal                                 │
       │                          └───────────────────────────────────────┘
       │                          ┌───────────────────────────────────────┐
       │                          │ 605. Perform descrambling processing on│
       │                          │ the n OTLC1 signals based on the n     │
       │                          │ unrelated scrambler generator          │
       │                          │ polynomials                            │
       │                          └───────────────────────────────────────┘
       │                          ┌───────────────────────────────────────┐
       │                          │ 606. Separately perform FEC coding on  │
       │                          │ the n descrambled OTLC1 signals        │
       │                          └───────────────────────────────────────┘
       │                          ┌───────────────────────────────────────┐
       │                          │ 607. Reassemble the n OTLC1 signals    │
       │                          │ into one OTUCn signal                  │
       │                          └───────────────────────────────────────┘
       │                                                  │
```

FIG. 18

7

Sending device

Communication unit

71

Processor

72

FIG. 19

8

Receiving device

Communication unit

81

Processor

82

FIG. 20

Sending apparatus

91

Receiving apparatus

92

FIG. 21

FIG. 22